# EUROPEAN PATENT APPLICATION

(11) **EP 1 889 882 A1**
(43) Date of publication of application: **20.02.2008**
(21) Application number: 06766510.9
(22) Date of filing: 08.06.2006
(51) Int. Cl.: C09B 33/18, B41J 2/01, B41M 5/00, C09D 11/00

(54) **AZO COMPOUND, INK COMPOSITION, RECORDING METHOD AND COLORED MATTER**

(30) Priority: 09.06.2005 JP 2005169210
(71) Applicant: NIPPON KAYAKU KABUSHIKI KAISHA, Tokyo 102-8172 (JP)
(72) Inventor: OHNO, Hiroaki, Tokyo 1158588 (JP); MATSUI, Takahiko, Tokyo 1158588 (JP); TAKAHASHI, Shinjirou, Tokyo 1158588 (JP); SHIRASAKI, Yasuo, Saitama-shi, Saitama 3370042 (JP)
(74) Representative: Gille Hrabal Struck Neidlein Prop Roos
(86) International application number: PCT/JP2006/311548
(87) International publication number: WO 2006/132327

(57) **Abstract**

The present invention relates to an azo compound represented by the following formula (1)
[KA 1] 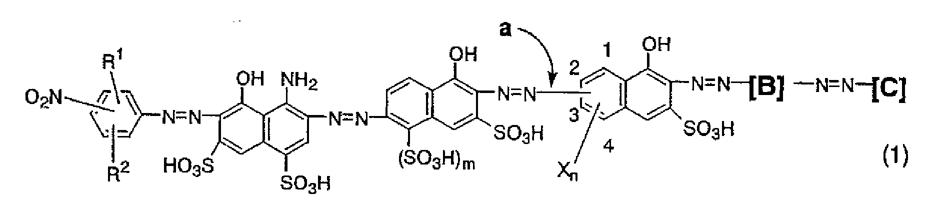 (wherein, each of R¹ and R² independently represents a hydrogen atom, a halogen atom, a cyano group, a carboxyl group, a sulfo group, a sulfamoyl group or the like, each of m and n independently represents 0 or 1, X represents a sulfo group, B represents a substituted p-phenylene group or a substituted p-naphthylene group (these may be substituted by a group selected from the group consisting of a sulfo group, a sulfo C1 to C4 alkoxy group, a C1 to C4 alkyl group and the like), and C represents a substituted phenyl group or a naphthyl group)
or a salt thereof, an ink composition containing it, especially a black ink composition. Said pentakis-azo compound is excellent in solubility to medium whose main component is water and suitable for an water-soluble composition (ink composition and the like) for inkjet recording and writing tools; recorded articles recorded using said composition are excellent in fastnesses such as light fastness and ozone gas fastness; bronzing is not generated on the recorded images; and its recording liquids are good in storage stability.

## Description

### Technical Field

The present invention relates to a novel azo compound or a salt thereof, an ink composition comprising these, and a colored article thereby.

### Background of the Invention

In a recording method by means of an inkjet printer as a typical method among various color recording methods, recording is performed by generating ink droplets and depositing them onto various record-receiving materials (such as paper, film and cloth). This method has been rapidly prevailing lately and is expected to grow remarkably in the future because of such features as quietness with less noise generation due to no direct contact of a recording head with a record-receiving material and easiness in downsizing and speed up. Conventionally, as an ink for a fountain pen or a felt-tip pen and an ink for inkjet recording, a water-based ink dissolving a water-soluble dye in an aqueous medium has been used, and in these water-soluble inks, a water-soluble organic solvent is generally added to prevent ink from clogging at a pen tip or an inkjet nozzle. These conventional inks are required to provide a recorded image with sufficient density, not to clog at a pen tip or an inkjet nozzle, to dry quickly on a record-receiving material, to bleed less, to have good storage stability, and the like. Also water-soluble dyes are required to have high solubility particularly in water and high solubility in a water-soluble organic solvent to be added to ink. In addition, formed images are required to have image fastness properties such as water fastness, light fastness, ozone gas fastness and moisture fastness.

Ozone gas fastness among them means durability against phenomenon that ozone gas having oxidizing property and the like in the air reacts with a dye on a recording paper to incur discoloration or fading of a printed image. Although oxidizing gas having this kind of action includes NOx, SOx and the like besides ozone gas, ozone gas among these oxidizing gases is regarded as a main causative substance to further promote the phenomenon of discoloration or fading of an inkjet recorded image. For an ink-receiving layer provided at the surface of a photo-image quality inkjet paper, so as to dry the ink faster and decrease bleed in high quality images, materials such as porous white inorganic substances and the like are often used, and on such recording papers, discoloration or fading in color caused by ozone gas occurs noticeably. As the phenomenon of discoloration or fading caused by oxidizing gas are characteristics of inkjet images, improvement of ozone gas fastness is one of the most important problems in the inkjet recording method.

To extend the application field of a printing method using ink in the future, ink compositions to be used for inkjet recording and colored articles colored thereby are strongly required to exhibit further improved light fastness, ozone gas fastness, moisture fastness and waterfastness.

Among inks with various hues prepared from various dyes, a black ink is an important one to be used for both of mono color and full color images. A lot of dyes for black ink have been proposed so far, but any product fully meeting the requirements of the marketplace has not been provided yet. Many coloring matters proposed are azo coloring matters, and the disazo coloring matter of C.I.Food Black 2 and the like among them has such problems that the optical density of printed images is low, water fastness and moisture fastness are not good, and that gas fastness is not sufficient. A polyazo coloring matter with extension of the conjugate system generally has such problems that the water-solubility is low, a bronzing phenomenon where a recorded image partially has metallic luster tends to take place, and that gas fastness is not sufficient. In addition, a metal complex of the azo coloring matter similarly proposed in large numbers has such problems that metal ion contained in them is not preferable in view of safety to creatures and environment, and that ozone gas fastness is extremely poor.

As a compound (coloring matter) for black ink for inkjet which is improved on ozone gas fastness which has recently been one of the most significant problems, for example, the compounds described in Patent Literature 1 are cited. The ozone gas fastness of these compounds, however, does not sufficiently satisfy the requirements of the market. In addition, as a compound having a closely similar structure to a coloring matter compound for black ink of the present invention, the compounds described in Patent Literatures 2 and 3 are cited where a residue group of gamma acid (6-amino-4-naphthole-2-sulfonic acid) or J acid (7-amino-4-naphthole-2-sulfonic acid) is bonded on the side of the amino group of H acid (4-amino-5-naphthole-2,7-disulfonic acid) or K acid (4-amino-5-naphthole-1,7-disulfonic acid) by azo-caupling and a phenyl group or a naphthyl group derivative is bonded on the side of the hydroxyl group by azo-coupling, but they do not satisfy sufficiently the requirements of the marketplace, particularly requirements on ozone gas fastness. Patent Literature 4 describes a tetrakis-azo or pentakis-azo black dye having excellent ozone gas fastness, which is, however, required for further improvement.

Patent Literature 1: JP 2003-183545 A
Patent Literature 2: JP 1987-109872 A
Patent Literature 3: JP 2003-201412 A
Patent Literature 4: JP 2005-68416 A

### Disclosure of the Invention

### Problems to Be Solved by the Invention

An object of the present invention is to provide a coloring matter compound for black ink which has high solubility in medium whose main component is water and stability in long-term storage of high concentrated aqueouse solution and ink, exhibits extremely high density of a printed image, does not generate bronzing on printed images even in the case of printing with a high concentrated solution on photo-image quality inkjet paper, gives recorded images of black color superior in fastnesses of the printed image, especially ozone gas fastness, and is synthesized easily and inexpensively, and an ink composition thereof.

### Means of Solving the Problems

The inventors of the present invention intensively studied a way to solve the above problems and have found that a particular pentakis-azo compound can solve the above problems and completed the present invention. That is, the present invention relates to;
(1) An azo compound represented by the following Formula (1) [KA 1] 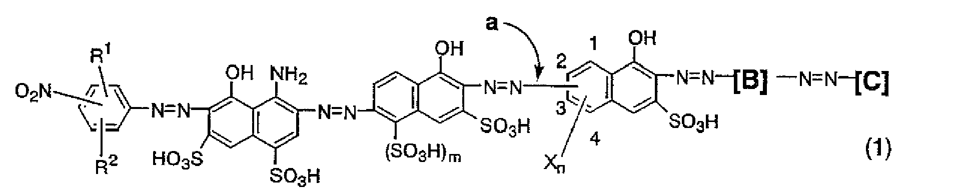 [(wherein, each of R¹ and R² independently represents a hydrogen atom, a halogen atom, a cyano group, a carboxyl group, a sulfo group, a sulfamoyl group, an N-alkylaminosulfonyl group, an N-phenylaminosulfonyl group, a C1 to C4 alkylsulfonyl group which may be substituted by a hydroxy group, a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonylamino group or a phenylsulfonylamino group (where a phenyl group may be substituted by a halogen atom, an alkyl group or a nitro group),
   m represents 0 or 1,
   n represents 0 or 1,
   Bonding a and Xn are bonded at any different positions of 1 to 4 which are position numbers marked on the naphthalene ring,
   X represents a sulfo group,
   [B] represents a group represented by the following formula (2) or (3)
   [KA 2] 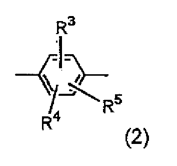 [KA 3] 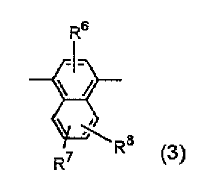 {in the formula (2) and (3), each of R³, R⁴, R⁵, R⁶, R⁷ and R⁸ independently represents a hydrogen atom, a halogen atom, a hydroxy group, a cyano group, a carboxyl group, a sulfo group, a sulfamoyl group, an N-alkylaminosulfonyl group, an N-phenylaminosulfonyl group, a C1 to C4 alkylsulfonyl group (which may be substituted by a hydroxy group), a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonylamino group or a phenylsulfonylamino group (where a phenyl group may be substituted by a halogen atom, an alkyl group or a nitro group)},
   [C] represents a substituted phenyl group or a substituted naphthyl group {a substituent on a phenyl group and a naphthyl group is a hydroxy group, a halogen atom, a cyano group, a carboxyl group, a sulfo group, a sulfamoyl group, an N-alkylaminosulfonyl group, an N-phenylaminosulfonyl group, a C1 to C4 alkylsulfonyl group (which may be substituted by a hydroxy group), a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonylamino group or a phenylsulfonylamino group (where a phenyl group may be substituted by a halogen atom, an alkyl group or a nitro group)},
   respectively]
   or a salt thereof,
(2) The azo compound or the salt thereof according to the above (1),
   wherein the bond position of Bonding a is the 2 position or the 3 position, the substitution position of X is the 3 position when the bond position of Bonding a is the 2 position, and the substitution position of X is the 4 position when the bond position of Bonding a is the 3 position,
(3) The azo compound or the salt thereof according to any one of the above (1) and (2), wherein the bond position of Bonding a is the 3 position, the substitution position of X is the 4 position, and m and n are 1,
(4) The azo compound or the salt thereof according to any one of the above (1) to (3), wherein R¹ is a sulfo group, the substitution position of the nitro group is the para position to the azo group when the substitution position of R¹ is the ortho position to the azo group, the substitution position of the nitro group is the ortho position to the azo group when the substitution position of R¹ is the para position to the azo group, and R² is a hydrogen atom,
(5) The azo compound or the salt thereof according to the above (1),
   wherein R¹ is a sulfo group and its substitution position is the ortho position to the azo group, the substitution position of the nitro group is the para position to the azo group, R² is a hydrogen atom, the bond position of Bonding a is the 3 position, the substitution position of X is the 4 position, and m and n are 1,
(6) The azo compound or the salt thereof according to any one of the above (1) to (5), wherein [B] is the formula (2),
(7) The azo compound or the salt thereof according to any one of the above (1) to (6), wherein [B] is the formula (2), R³ is a sulfo group, R⁴ and R⁵ are hydrogen atoms, and [C] is a substituted phenyl group having a sulfo group as a substituent,
(8) The azo compound or the salt thereof according to the above (1),
   wherein R¹ is a sulfo group and its substitution position is the ortho position to the azo group, the substitution position of the nitro group is the para position to the azo group, and R² is a hydrogen atom; or R¹ is a sulfo group and its substitution position is para position to the azo group, the substitution position of the nitro group is the ortho position to the azo group, and R² is a hydrogen atom; otherwise R¹ is a C1 to C4 alkoxy group and its substitution position is the ortho position to the azo position, the substitution position of the nitro group is the para position to the azo group, and R² is a sulfo group and its substitution position is the meta position to the azo position, except for the case that the three groups of R¹, the nitro group and R² are substituted in sequence when R² is a sulfo group,
   wherein the substitution position of X is the 3 position when the bond position of Bonding a is the 2 position, and the substitution position of X is the 4 position when the bond position of Bonding a is the 3 position,
   wherein m is 1 and n is 0 or 1,
   wherein in the case that [B] is the formula (2), R³ is a sulfo group, a sulfo (C1 to C4) alkoxy group or a carboxy C1 to C4 alkoxy group, R⁴ is a hydrogen atom, and R⁵ is a hydrogen atom or a C1 to C4 alkyl group; and in the case that [B] is the formula (3), R⁶ is a hydrogen atom, at least one of R⁷ and R⁸ is a sulfo group, and
   wherein in the case that [C] is a substituted phenyl group, the substituent on the phenyl group is selected from a sulfo group, a carboxyl group, a nitro group, a sulfamoyl group, a hydroxy C1 to C4 alkylsulfo group and a C1 to C4 alkoxy group; and in the case that [C] is a substituted naphthyl group, the substituent on the naphthyl group is selected from a sulfo group, a nitro group and a hydroxy group,
(9) The azo compound or the salt thereof according to the above (1),
   wherein R¹ is a sulfo group and its substitution position is the ortho position to the azo group, the substitution position of the nitro group is the para position to the azo group, R² is a hydrogen atom, the bond position of Bonding a is the 3 position, the substitution position of X is the 4 position, m and n are 1, [B] is the formula (2), R³ is a sulfo group, and R⁴ and R⁵ are hydrogen atoms, and
   wherein in the case that [C] is a substituted phenyl group, the substituent on the phenyl group is selected from the group consisting of a sulfo group and a carboxyl group; and in the case that [C] is a substituted naphthyl group, the substituent on the naphthyl group is selected from a sulfo group and a hydroxy group,
(10) The azo compound or the salt thereof according to the above (1),
   wherein R¹ is a sulfo group and its substitution position is the ortho position to the azo group, the substitution position of the nitro group is the para position to the azo position, R² is a hydrogen atom, the bond position of Bonding a is the 3 position , the substitution position of X is the 4 position , m and n are 1, [B] is the formula (2), R³ is a sulfo group, R⁴ and R⁵ are hydrogen atoms, and [C] is a substituted phenyl group, and its substituent is a sulfo group,
(11) The azo compound or the salt thereof according to the above (1),
   wherein R¹ is a sulfo group and its substitution position is the ortho position to the azo group, the substitution position of the nitro group is the para position to the azo position, R² is a hydrogen atom, the bond position of Bonding a is the 3 position , the substitution position of X is the 4 position , m and n are 1, [B] is the formula (2), R³ is a sulfopropoxy group, R⁴ is a hydrogen atom, R⁵ is a methyl, and [C] is a substituted phenyl group or a substituted naphthyl group and its substituent is a group selected from a sulfo group, a hydroxy group and a carboxyl group,
(12) The azo compound or the salt thereof according to the above (1),
   wherein R¹ is a sulfo group and its substitution position is the para position to the azo group, the substitution position of the nitro group is the ortho position to the azo group, R² is a hydrogen atom, the bond position of Bonding a is the 3 position , the substitution position of X is the 4 position , m and n are 1, [B] is the formula (2), R³ is a sulfo group, R⁴ and R⁵ are hydrogen atoms, and [C] is a substituted phenyl group and its substituent is a sulfo group,
(13) An ink composition characterized by comprising at least one of the azo compounds or salts thereof according to any one of the above (1) to (12),
(14) An inkjet print recording method characterized by using the ink composition according to the above (13),
(15) The inkjet print recording method according to the above (14),
   wherein a record-receiving material in the inkjet print recording method is a sheet for information transmission,
(16) The inkjet print recording method according to the above (15),
   wherein the sheet for information transmission contains a porous white inorganic substance,
(17) An ink jet printer loading a container containing the ink composition according to the above (13),
(18) A colored article colored with the azo compound or the salt thereof according to any one of the above (1) to (12),
(19) The azo compound or the salt thereof according to the above (1),
   wherein R¹ is a sulfo group, one of the substitution positions of R¹ and the nitro group is the ortho position to the azo group and the other is the para position, R² is a hydrogen atom, the substitution position of X is the 3 position when the bond position of Bonding a is the 2 position, the substitution position of X is the 4 position when the bond position of Bonding a is the 3 position, m and n are 1, [B] is a group represented by the formula (2); (1) R⁴ and R⁵ are hydrogen atoms and [C] is a sulfo substituted phenyl group when R³ is a sulfo group, or (2) R⁴ is a hydrogen atom and R⁵ is a C1 to C4 alkyl group when R³ is a sulfo C1 to C4 alkoxy group,
(20) The azo compound or the salt thereof according to Claim 19,
   wherein [C] in (1) is a dicarboxyl substituted phenyl group or a disulfo and hydroxy substituted naphthyl group when [B] is a group represented by the formula (2), R³ is a sulfo C1 to C4 alkoxy group, R⁴ is a hydrogen atom, and R⁵ is a C1 to C4 alkyl group,
(21) The azo compound or the salt thereof according to the above (1) or (20), wherein [B] is 2-(3-sulfopropoxy)-5-methyl-1,4-phenylene represented by the following formula (2a).
   [KA 4]

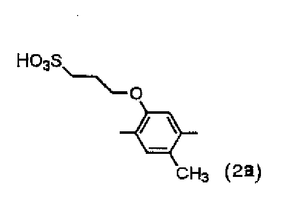

### Effect of the Invention

The azo compound of the present invention represented by the formula (1) or a salt thereof (hereinafter, referred to as the azo compound for simplicity, which is used to mean any of the free acid compound and/or a salt thereof unless otherwise noted as for the azo compound of the present invention) is excellent in water-solubility, so filtration property by a membrane filter in the production process of the ink composition is good and its recording liquid is excellent in stability in its storage and jet stability. In addition, the ink composition of the present invention containing this azo compound generates no crystal precipitation and exhibits no change in physical property or color, nor the like, after storage for a long period of time. Accordingly, it has good storage stability. Further, an ink composition containing the azo compound of the present invention can be suitably used for inkjet recording and writing tools, and when recording is performed therewith on plain paper and inkjet paper, the printing density of recorded images is extremely high and no bronzing is generated on the images which is even printed with its high concentration solution; and it is also excellent in fastnesses, particularly ozone gas fastness. Using the ink composition of the present invention together with an ink composition with dyes of magenta, cyan and yellow enables full color inkjet recording excellent in various fastnesses and storage. As mentioned above, the ink composition of the present invention is remarkably useful as a black ink for inkjet recording.

### Best Mode for Carrying out the invention

Hereinafter, the present invention will be explained specifically.
As for R¹ to R⁸ in the formulas (1), (2) and (3) and substituents of [C], examples of the N-alkylaminosulfonyl group include, for example, a N- C1 to C4 alkylaminosulfonyl group such as an N-methylaminosulfonyl group, an N-ethylaminosulfonyl group, an N-(n-butyl) aminosulfonyl group, an N,N-dimethylaminosulfonyl group and an N,N-di(n-propyl) aminosulfonyl group.

As for R¹ to R⁸ in the formulas (1), (2) and (3) and substituents of [C], examples of the C1 to C4 alkylsulfonyl group which may be substituted by a hydroxy group include, for example, methylsulfonyl, ethylsulfonyl, propylsulfonyl, butylsulfonyl, hydroxyethylsulfonyl, 2-hydroxypropylsulfonyl, and the like.

As for R¹ to R⁸ in the formulas (1), (2) and (3) and substituents of [C], examples of the acyl group include, for example, a C1 to C4 aliphatic acyl group such as acetyl, propionyl, butyryl or isobutyryl, a C6 to C10 aromatic acyl group such as benzoyl or naphthoyl and the like.

As for R¹ to R⁸ in the formulas (1), (2) and (3) and substituents of [C], examples of the C1 to C4 alkyl group which may be substituted by a hydroxy group or a C1 to C4 alkoxy group include, for example, methyl, ethyl, n-propyl, isopropyl, n-butyl, isobutyl, sec-butyl, tert-butyl, 2-hydroxyethyl, 2-hydroxypropyl, 3-hydroxypropyl, methoxyethyl, 2-ethoxyethyl, n-propoxyethyl, isopropoxyethyl, n-butoxyethyl, methoxypropyl, ethoxypropyl, n-propoxypropyl, isopropoxybutyl, n-propoxybutyl, and the like.

As for R¹ to R⁸ in the formulas (1), (2) and (3) and substituents of [C], examples of the C1 to C4 alkoxy group which may be substituted by a hydroxy group, a C1 to C4 alkoxy group, a sulfo group or a carboxyl group include, for example, methoxy, ethoxy, n-propoxy, isopropoxy, n-butoxy, sec-butoxy, tert-butoxy, 2-hydroxyethoxy, 2-hydroxypropoxy, 3-hydroxypropoxy, methoxyethoxy, ethoxyethoxy, n-propoxyethoxy, isopropoxyethoxy, n-butoxyethoxy, methoxypropoxy, ethoxypropoxy, n-propoxypropoxy, isopropoxybutoxy, n-propoxybutoxy, 2-hydroxyethoxyethoxy, carboxymethoxy, 2-carboxyethoxy, 3-carboxypropoxy, 3-sulfopropoxy, 4-sulfobutoxy and the like.

As for R¹ to R⁸ in the formulas (1), (2) and (3) and substituents of [C], examples of the acylamino group include, for example, a C1 to C4 aliphatic acylamino group such as acetylamino, propionylamino, butyrylamino and isobutyrylamino, a C6 to C10 aromatic acylamino group such as benzoylamino and naphthoylamino, and the like.

As for R¹ to R⁸ in the formulas (1), (2) and (3) and substituents of [C], examples of the alkylsulfonylamino group include, for example, C1 to C4 aliphatic sulfonylamino such as methylsulfonylamino, ethylsulfonylamino and propylsulfonylamino, and the like.

As for R¹ to R⁸ in the formulas (1), (2) and (3) and substituents of [C], examples of the phenylsulfonylamino group which may be substituted by a halogen atom (preferably a chlorine atom or a bromine atom), an alkyl group (preferably C1 to C4 alkyl) or a nitro group include, for example, benzenesulfonylamino, toluenesulfonylamino, chlorobenzenesulfonylamino, nitrobenzenesulfonylamino and the like.

Preferable R¹ and R² in the formula (1) are a hydrogen atom, a chlorine atom, a bromine atom, a cyano group, a carboxyl group, a sulfo group, a sulfamoyl group, an N-methylaminosulfonyl group, an N-phenylaminosulfonyl group, a methylsulfonyl group, a hydroxyethylsulfonyl group, a phosphono group, a nitro group, an acetyl group, a benzoyl group, a ureide group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group, a benzoylamino group and the like, more preferably a hydrogen atom, a chlorine atom, a cyano group, a sulfamoyl group, an acetyl group, a methylsulfonyl group, a hydroxyethylsulfonyl group, a nitro group, a carboxyl group and a sulfo group, and further preferably a hydrogen atom, a carboxyl group and a sulfo group. Further preferable R¹ is a carboxyl group or a sulfo group, and a sulfo group is particularly preferable. R² is particularly preferably a hydrogen atom. The substitution position of R¹ is preferably the para position or the ortho position to azo group, and it is preferable that the substitution position of the nitro group is the para position to the azo group when the substitution position of R¹ is the ortho position to the azo group, and the substitution position of the nitro group is the ortho position to the azo group when the substitution position of R¹ is the para position to the azo group.
Each of m and n is independently 0 or 1, and the both are preferably 1.
It is shown that Bonding a and Xn are bonded or substituted at any different position of 1 to 4 which are position numbers marked on the naphthalene ring, and the bond position of Bonding a is preferably the 2 position or the 3 position. And, when n is 1, the substitution position of X is preferably the 3 position in the case that the bond position of Bonding a is the 2 position and the substitution position of X is preferably the 4 position in the case that the bond position of Bonding a is the 3 position.

Preferable R³ to R⁸ in the formulas (2) and (3) are a hydrogen atom, a chlorine atom, a hydroxy group, a cyano group, a carboxyl group, a sulfo group, a sulfamoyl group, an N-methylaminosulfonyl group, an N-phenylaminosulfonyl group, a methylsulfonyl group, a hydroxyethylsulfonyl group, a nitro group, an acetyl group, a benzoyl group, a ureide group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group, a benzoylamino group and the like, more preferably a hydrogen atom, a methyl group, an ethyl group, a methoxy group, an ethoxy group, a 2-hydroxyethoxy group, a 3-sulfopropoxy group, a carboxyl group and a sulfo group, and further preferably a hydrogen atom, a methyl group, a 3-sulfopropoxy group, a carboxyl group and sulfo group.
And, [B] is preferably a phenylene group of the formula (2).
As for preferable substituents in the formula (2), any one of R³ to R⁵ is a sulfo group or a sulfo C1 to C4 alkoxy group (more preferably a sulfopropoxy group), any one of R³ to R⁵ is more preferably a sulfo group or a sulfo C1 to C4 alkoxy group when [C] is a substituted phenyl group, and any one of R³ to R⁵ is preferably a sulfo C1 to C4 alkoxy group (more preferably a sulfopropoxy group) when [C] is a substituted naphthyl group. A more preferable group as [B] is a phenylene group substituted by a sulfo group or a sulfo C1 to C4 alkoxy group at the meta position to the azo group on the side of [C], a phenylene group substituted by said sulfo C1 to C4 alkoxy group is preferably substituted with, in addition, a C1 to C4 alkyl group at the para position to the sulfo C1 to C4 alkoxy group, and a group represented by the above formula (2a) can be cited as one of the most preferable ones.

A preferable substituent of [C] in the formula (1) is a hydrogen atom, a chlorine atom, a bromine atom, a hydroxy group, a cyano group, a carboxyl group, a sulfo group, a sulfamoyl group, an N-methylaminosulfonyl group, an N-phenylaminosulfonyl group, a methylsulfonyl group, a hydroxyethylsulfonyl group, a phospho group, a nitro group, an acetyl group, a benzoyl group, a ureide group, a methyl group, a methoxy group, an ethyl group, an ethoxy group, a propyl group, a propoxy group, a 2-hydroxyethoxy group, a 2-methoxyethoxy group, a 2-ethoxyethoxy group, a 3-sulfopropoxy group, a 4-sulfobutoxy group, a carboxymethoxy group, a 2-carboxyethoxy group, an acetylamino group, a benzoylamino group and the like, more preferably a hydrogen atom, a hydroxy group, a carboxyl group, a sulfo group, a sulfamoyl group, a hydroxyethylsulfonyl group, a nitro group, a methyl group, a methoxy group, an ethyl group and an ethoxy group, and further preferably a hydrogen atom, a hydroxy group, a carboxyl group, a sulfo group, a sulfamoyl group and a nitro group.
When [C] is a substituted phenyl group, a preferable substituent can include a carboxyl group, a sulfo group or a hydroxy C1 to C4 alkylsulfonyl group. More preferable is a carboxyl group or a sulfo group, the most preferable is a sulfo group, and these may be plural. And in this case, said substituted phenyl group may also have the above substituents (for example, a nitro group, a sulfamoyl group and the like) other than these.
The preferable substituted phenyl group can include a sulfo-substituted phenyl group and dicarboxy-substituted phenyl group, for example, a p-sulfophenyl group, 3,5-dicarboxyphenyl group or the like.
When [C] is a substituted naphthyl group, a preferable substituent can include a sulfo group. In this case, said substituted naphthyl group can also have another substituent together with a sulfo group, said other substituent can include any of the above groups, and preferably a hydroxy group. The preferable substituted naphthyl group is a disulfo and hydroxy substituted naphthyl group, for example, a 3,6-disulfo-8-hydroxynaphthyl-1-yl group can be cited.
A preferable compound in the formula (1) is a compound where R¹ is sulfo group, one of the substitution positions of R¹ and nitro group is the ortho position to the azo group and the other is the para position to the azo group, R² is a hydrogen atom, the substitution position of X is the 3 position when the bond position of Bonding a is the 2 position, and the substitution position of X is the 4 position when the bond position of Bonding a is the 3 position, m and n are 1, [B] is a group represented by the formula (2), and [C] is a substituted phenyl group or a substituted naphthyl group. As for a more preferable compound of the formula (1), the following two cases are cited.
(1) For the above preferable compounds, a compound wherein R³ in the formula (2) is also a sulfo group, R⁴ and R⁵ are hydrogen atoms, and [C] is a sulfo substituted phenyl group; and
(2) For the above preferable compounds, a compound wherein R³ in the formula (2) is also a sulfo C1 to C4 alkoxy group, R⁴ is a hydrogen atom, R⁵ is a C1 to C4 alkyl group, and [C] is a substituted phenyl group or a substituted naphthyl group, more preferably a dicarboxyl substituted phenyl group in the case of a substituted phenyl group and a disulfo and hydroxy substituted naphthyl group in the case of a substituted naphthyl group. In this case, a group of the formula (2) is most preferably the above formula (2a).

A salt of the azo compound represented by the above formula (1) is an inorganic or organic cation salt. Specific examples of the inorganic salt include an alkali metal salt, an alkaline earth metal salt and an ammonium salt, preferably salts of lithium, sodium, potassium and an ammonium salt, and the organic cation salt includes, for example, a salt of a compound represented by the following formula (4), but not limited thereto.

[KA 5]

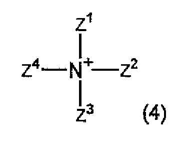

As Z¹, Z², Z³ and Z⁴ in the formula (4), an alkyl group is preferable. Specific examples of the alkyl group include methyl, ethyl, n-propyl, isopropyl, n-butyl, isobutyl, sec-butyl, tert-butyl and the like. Further, a hydroxyalkyl group is also preferable, and specific examples of the hydroxyalkyl group include a hydroxy C1 to C4 alkyl group such as a hydroxymethyl group, a hydroxyethyl group, a 3-hydroxypropyl group, a 2-hydroxypropyl group, a 4-hydroxybutyl group, a 3-hydroxybutyl group and a 2-hydroxybutyl group. Furthermore, a hydroxyalkoxyalkyl group is preferable, and examples of the hydroxyalkoxyalkyl group include a hydroxy C1 to C4 alkoxy- C1 to C4 alkyl group such as a hydroxyethoxymethyl group, a 2-hydroxyethoxyethyl group, a 3-hydroxyethoxypropyl group, a 2-hydroxyethoxypropyl group, a 4-hydroxyethoxybutyl group, a 3-hydroxyethoxybutyl group, a 2-hydroxyethoxybutyl group, and preferably a hydroxyethoxy C1 to C4 alkyl group. Among the above preferable groups for Z¹, Z², Z³ and Z⁴, a hydrogen atom; a methyl group; a hydroxy C1 to C4 alkyl group such as a hydroxymethyl group, a hydroxyethyl group, a 3-hydroxypropyl group, a 2-hydroxypropyl group, a 4-hydroxybutyl group, a 3-hydroxybutyl group and a 2-hydroxybutyl group; and a hydroxyethoxy C1 to C4 alkyl group such as a hydroxyethoxymethyl group, a 2-hydroxyethoxyethyl group, a 3-hydroxyethoxypropyl group, a 2-hydroxyethoxypropyl group, a 4-hydroxyethoxybutyl group, a 3-hydroxyethoxybutyl group and a 2-hydroxyethoxybutyl group are particularly preferably included.

Specific examples of Z¹, Z², Z³ and Z⁴ of the formula (4) are shown in Table 1.

[Table 1]

**Table 1**

| Compound No. | Z1 | Z2 | Z3 | Z4 |
|---|---|---|---|---|
| 1-1 | H | -C2H4OH | -C2H4OH | -C2H4OH |
| 1-2 | CH3 | -C2H4OH | -C2H4OH | -C2H4OH |
| 1-3 | H | -CH2CH(OH)CH3 | -CH2CH(OH)CH3 | -CH2CH(OH)CH3 |
| 1-4 | CH3 | -CH2CH(OH)CH3 | -CH2CH(OH)CH3 | -CH2CH(OH)CH3 |
| 1-5 | H | -C2H4OH | H | -C2H4OH |
| 1-6 | CH3 | -C2H4OH | H | -C2H4OH |
| 1-7 | H | -CH2CH(OH)CH3 | H | -CH2CH(OH)CH3 |
| 1-8 | CH3 | -CH2CH(OH)CH3 | H | -CH2CH(OH)CH3 |
| 1-9 | CH3 | -C2H4OH | CH3 | -C2H4OH |
| 1-10 | CH3 | -CH2CH(OH)CH3 | CH3 | -CH2CH(OH)CH3 |

The azo compound of the present invention represented by the formula (1) can be synthesized by, for example, the following method. In this connection, the structural formulas of the compounds in steps are shown in free acid form.
The following formula (5)

[KA 6]

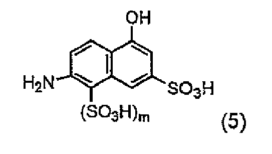

(wherein, m has the same meaning as in the formula (1))
and a p-toluenesulfonyl chloride are reacted in the presence of alkali to obtain a compound represented by the formula (6).

[KA 7]

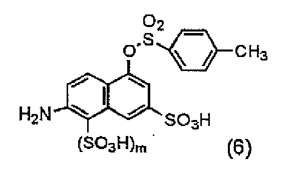

(wherein, m has the same meaning as described above)
Said resulting compound is diazotized in a conventional manner and then subjected to a coupling reaction with 4-amino-5-naphthole-1,7-disulfonic acid under acidic conditions to make a compound represented by the formula (7),

[KA 8]

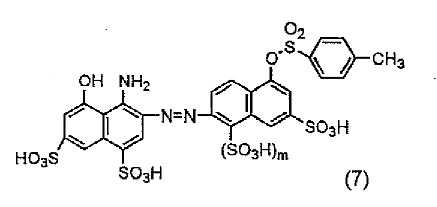

(wherein, m has the same meaning as described above)
which compound is subjected to a coupling reaction with a compound obtained by diazotization of a compound represented by the formula (8)

[KA 9]

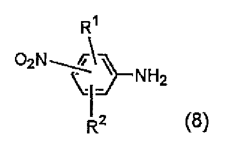

(wherein, R¹ and R² have the same meanings as in the formula (1))
in a conventional manner, to make a compound represented by the formula (9),

[KA 10]

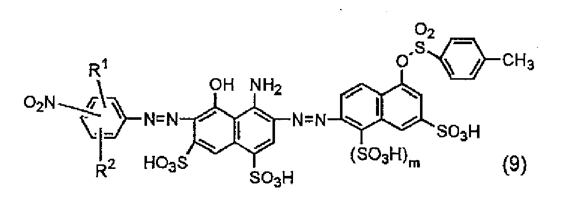

(wherein, R¹, R² and m have the same meanings as described above).
which compound is hydrolyzed under alkaline conditions to obtain a compound represented by the formula (10)

[KA 11]

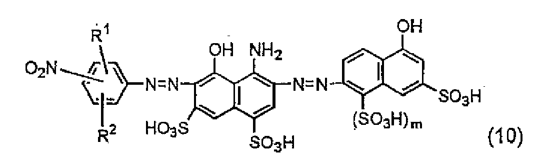

(wherein, R¹, R² and m have the same meanings as described above).
Meanwhile, separately from this, a compound represented by the formula (11)

[KA 12] 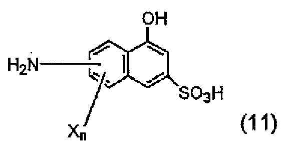 (wherein, X and n have the same meanings as in the formula (1))
and a p-toluenesulfonyl chloride are reacted in the presence of alkali to obtain a compound represented by the formula (12),

[KA 13] 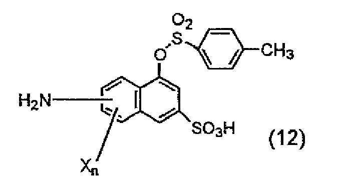 (wherein, X and n have the same meanings as in the formula (1))
and this is diazotized in a conventional manner. This diazotized product is subjected to a coupling with the compound of the formula (10) obtained above to obtain a compound represented by the formula (13).

[KA 14] 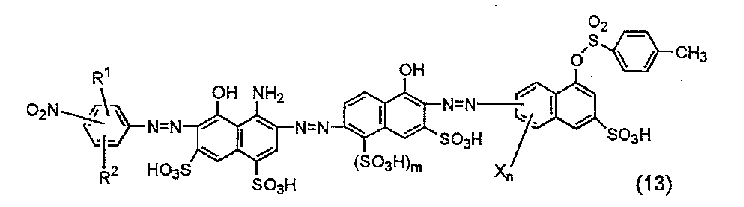 (wherein, R¹, R², m, n and X have the same meanings as described above)
The resulting compound is hydrolyzed under alkaline conditions to obtain a compound represented by the formula (14).

[KA 15] 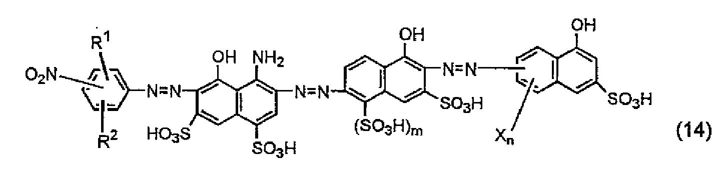 (wherein, R¹, R², m, n and X have the same meanings as described above)
Meanwhile, an amine compound represented by the formula (15)

[KA 16]

H₂N**-[C]** (15)

(wherein, [C] has the same meaning as described above)
is diazotized in a conventional manner, and then said diazotized product and a compound represented by the formula (16)

[KA 17]

H₂N-**[B]** (16)

(wherein, [B] has the same meaning as described above)
are subjected to a coupling reaction to obtain a monoazo compound represented by the formula (17).

[KA 18]

H₂N-**[B]** -N=N-**[C]** (17)

(wherein, [B] and [C] have the same meanings as described above).
Said monoazo compound is diazotized in a conventional manner to obtain a diazo compound, which compound and the compound represented by the above formula (14) are subjected to a coupling reaction to obtain the pentakis-azo compound of the present invention represented by the formula (1) or a salt thereof.

Suitable examples of the compound of the present invention represented by the formula (1) are not particularly limited, but include the compounds shown by the following formulas. A sulfo group and a carboxyl group are shown in free acid form in the tables. These are, however, obviously used in the sense of including salts.

[Table 2]

**Table 2**

| Comp. No. | Structural Formula |
|---|---|
| 1 | 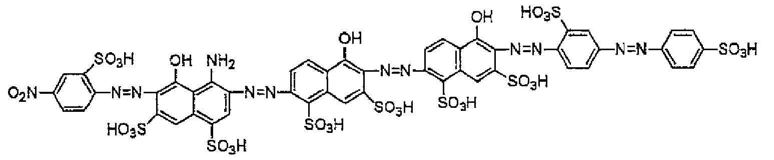 |
| 2 | 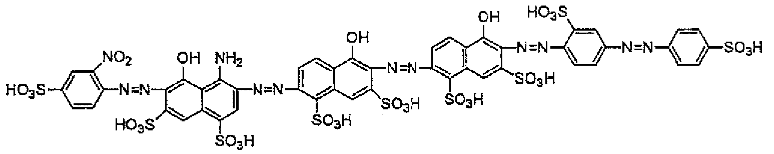 |
| 3 | 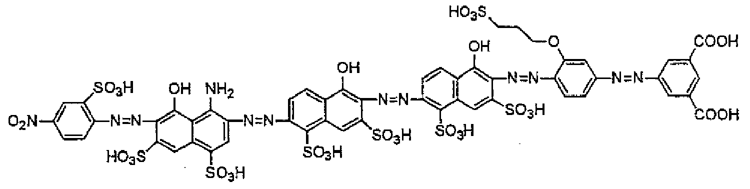 |
| 4 | 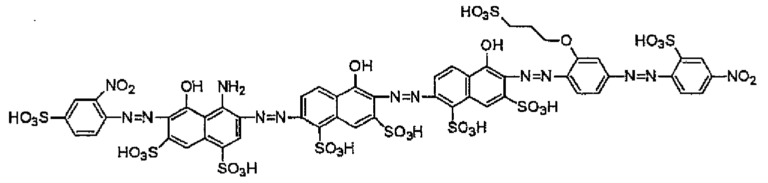 |
| 5 | 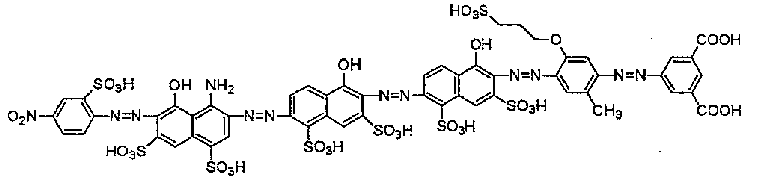 |
| 6 | 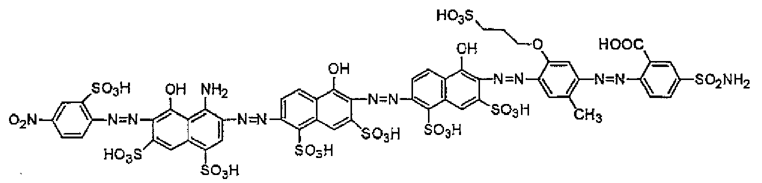 |

[Table 3]

**Table 3**

| Comp. No. | Structural Formula |
|---|---|
| 7 | 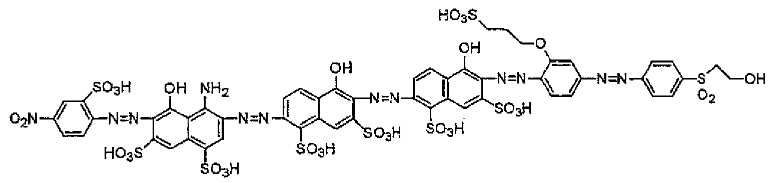 |
| 8 | 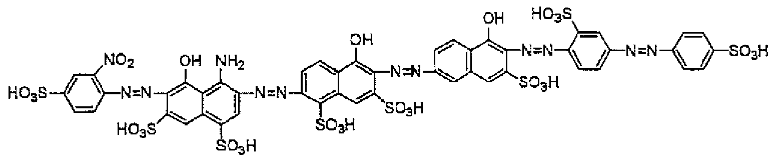 |
| 9 | 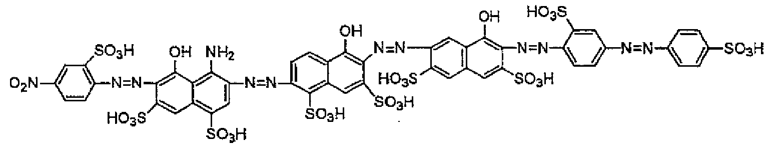 |
| 10 | 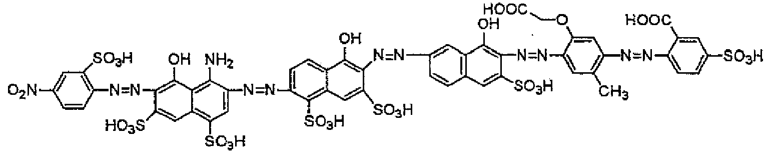 |
| 11 | 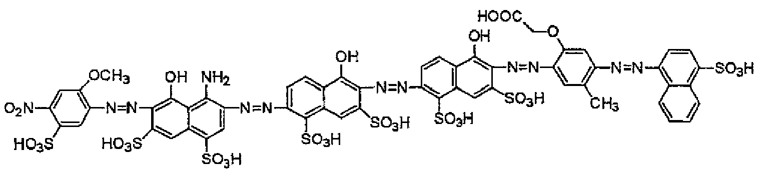 |
| 12 | 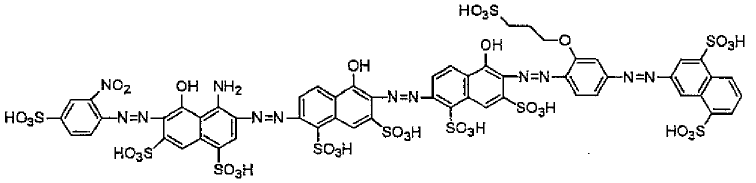 |

[Table 4]

**Table 4**

| Comp. No. | Structural Formula |
|---|---|
| 13 | 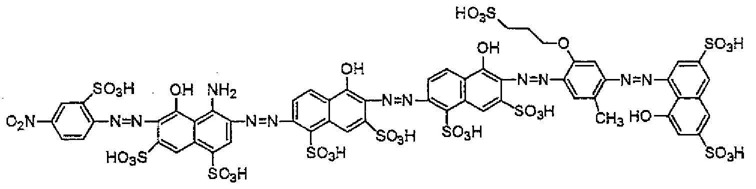 |
| 14 | 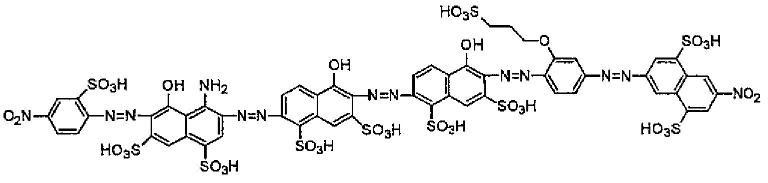 |
| 15 | 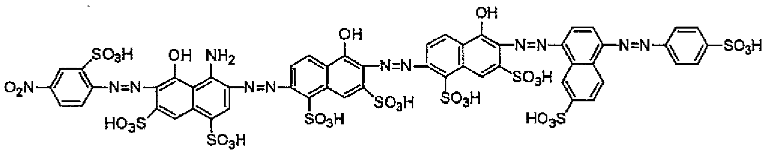 |
| 16 | 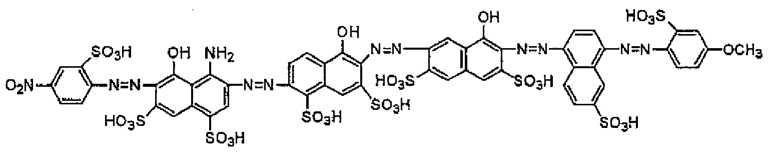 |
| 17 | 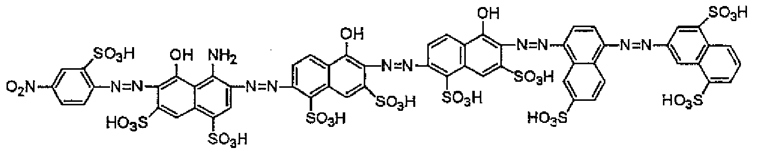 |
| 18 | 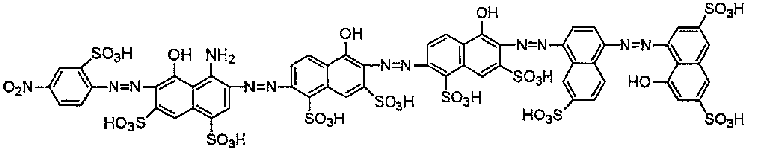 |

The esterification reaction of the compound of the formula (5) and the p-toluenesulfonyl chloride is carried out by a known method per se, advantageously in an aqueous or aqueous organic medium, for example, at a temperature of 20 to 100°C, preferably 30 to 80°C, and at a pH value of from neutral to alkaline. It is preferable to carry out at a pH value of from neutral to weakly alkaline, for example, pH 7 to 10. Adjustment of this pH value is carried out by addition of a base. As the base, for example, alkali metal hydroxides such as lithium hydroxide and sodium hydroxide, alkali metal carbonates such as lithium carbonate, sodium carbonate and potassium carbonate, acetates such as sodium acetate, or the like can be used. The compound of the formula (5) and the p-toluenesulfonyl chloride are used in nearly stoichiometric amounts.

The diazotization of the compound of the formula (6) is carried out by a known method per se, for example, in an inorganic acid medium (e.g. an aqueous solution of inorganic acid such as hydrochloric acid), for example, at a temperature of -5 to 30°C, preferably 5 to 15°C, using a nitrite salt, for example, an alkali metal nitrite salt such as sodium nitrite. The coupling of the diazotized product of the compound of the formula (6) and 4-amino-5-naphthole-1,7-disulfonic acid is carried out under the well known conditions per se. It is advantageous to carry out in an aqueous or aqueous organic medium, for example, at a temperature of -5 to 30°C, preferably 5 to 25°C, and at a pH value of from acidic to neutral. Because pH becomes acidic in the coupling bath, the pH is adjusted if required, preferably at a pH value of from acidic to weakly acidic, for example, at pH 1 to 4 to carry out. This adjustment of the pH value is carried out by addition of a base. As the base, for example, alkali metal hydroxides such as lithium hydroxide and sodium hydroxide; alkali metal carbonates such as lithium carbonate, sodium carbonate and potassium carbonate; acetates such as sodium acetate; ammonia; organic amine, or the like can be used. The compound of the formula (6) and 4-amino-5-naphthole-1,7-disulfonic acid are used in nearly stoichiometric amounts.

The diazotization of the compound of the formula (8) is also carried out by a known method per se, for example, in an inorganic acid medium, for example, at a temperature of -5 to 30°C, preferably 0 to 15°C, using a nitrite salt, for example, an alkali metal nitrite salt such as sodium nitrite. The coupling of the diazotized product of the compound of the formula (8) and the compound of the formula (7) is also carried out under the well known conditions per se. It is advantageous to carry out in an aqueous or aqueous organic medium, for example, at a temperature of -5 to 30°C, preferably 10 to 25°C, and at a pH value of from weakly acidic to alkaline. It is preferable to carry out at a pH value of from weakly acidic to weakly alkaline, for example, pH 5 to 10, and adjustment of the pH value is carried out by addition of a base. As the base, for example, alkali metal hydroxides such as lithium hydroxide and sodium hydroxide; alkali metal carbonates such as lithium carbonate, sodium carbonate and potassium carbonate; acetates such as sodium acetate; ammonia; organic amine; or the like can be used. The compounds of the formulas (7) and (8) are used in nearly stoichiometric amounts.

The production of the compound of the formula (10) by hydrolyzation of the compound of the formula (9) is also carried out by a known method per se. Advantageous is a method of heating in an aqueous alkaline medium, which is , for example, carried out by addition of a sodium hydroxide or a potassium hydroxide to a solution containing the compound of the formula (9) to adjust the pH at no less than 9.5, and then by heating, for example, to a temperature of 20 to 150°C, preferably to a temperature of 30 to 100°C. At this time, the pH value of the reaction solution is preferably maintained at 9.5 to 11.5. This adjustment of the pH value is carried out by addition of a base. The bases described above can be used.

The esterification reaction of the compound of the formula (11) and the p-toluenesulfonyl chloride is carried out by a known method per se, advantageously in an aqueous or aqueous organic medium, for example, at a temperature of 20 to 100°C, preferably 30 to 80°C, and at a pH value of from neutral to alkaline. It is preferable to carry out at a pH value of from neutral to weakly alkaline, for example, pH 7 to 10. This adjustment of the pH value is carried out by addition of a base. As the base, for example, alkali metal hydroxides such as lithium hydroxide and sodium hydroxide, alkali metal carbonates such as lithium carbonate, sodium carbonate and potassium carbonate, acetates such as sodium acetate, or the like can be used.
The compound of the formula (11) and the p-toluenesulfonyl chloride are used in nearly stoichiometric amounts.

The diazotization of the compound of the formula (12) is also carried out by a known method per se, for example, in an inorganic acid medium, for example, at a temperature of -5 to 30°C, preferably 0 to 15°C, using a nitrite salt, for example, an alkali metal nitrite salt such as sodium nitrite. The coupling of the diazotized product of the compound of the formula (12) and the compound of the formula (10) is also carried out under the well known conditions per se. It is advantageous to carry out in an aqueous or aqueous organic medium, for example, at a temperature of -5 to 30°C, preferably 10 to 25°C, and at a pH value of from weakly acidic to alkaline. It is preferable to carry out at a pH value of from weakly acidic to weakly alkaline, for example, at pH 5 to 10, and adjustment of the pH value is carried out by addition of a base. As the base, for example, alkali metal hydroxides such as lithium hydroxide and sodium hydroxide; alkali metal carbonates such as lithium carbonate, sodium carbonate and potassium carbonate; acetates such as sodium acetate; ammonia; organic amine; or the like can be used. The compounds of the formulas (10) and (12) are used in nearly stoichiometric amounts.

The production of the compound of the formula (14) by hydrolyzation of the compound of the formula (13) is also carried out by a known method per se. Advantageous is a method of heating in an aqueous alkaline medium, which is, for example, carried out by addition of a sodium hydroxide or a potassium hydroxide to a solution containing the compound of the formula (13) to adjust the pH at no less than 9.5, and then by heating, for example, to a temperature of 20 to 150°C, preferably to a temperature of 30 to 100°C. At this time, the pH value of the reaction solution is preferably maintained at 9.5 to 11.5. This adjustment of the pH value is carried out by addition of a base. The bases described above can be used.

The diazotization of the compound of the formula (15) is also carried out by a known method per se, for example, in an inorganic acid medium, for example, at a temperature of -5 to 30°C, preferably 0 to 15°C, using a nitrite salt, for example, an alkali metal nitrite salt such as sodium nitrite. The coupling of the diazotized product of the compound of the formula (15) and the compound of the formula (16) is also carried out under the well known conditions per se. It is advantageous to carry out in an aqueous or aqueous organic medium, for example, at a temperature of -5 to 30°C, preferably 5 to 25°C, and at a pH value of from acidic to neutral. It is carried out, for example, at pH 1 to 7, and adjustment of the pH value is carried out by addition of a base. As the base, for example, alkali metal hydroxides such as lithium hydroxide and sodium hydroxide; alkali metal carbonates such as lithium carbonate, sodium carbonate and potassium carbonate; acetates such as sodium acetate; ammonia; organic amine; or the like can be used. The compounds of the formulas (15) and (16) are used in nearly stoichiometric amounts.

The diazotization of the compound of the formula (17) is also carried out by a known method per se, for example, in an inorganic acid medium, for example, at a temperature of -5 to 30°C, preferably 5 to 25°C, using a nitrite salt, for example, an alkali metal nitrite salt such as sodium nitrite. The coupling of the diazotized product of the compound of the formula (17) and the compound of the formula (16) is also carried out under the well known conditions per se. It is advantageous to carry out in an aqueous or aqueous organic medium, for example, at a temperature of -5 to 30°C, preferably 10 to 30°C, and at a pH value of from weakly acidic to alkaline. It is preferable to carry out at a pH value of from weakly acidic to weakly alkaline, for example, at pH 6 to 10, and adjustment of the pH value is carried out by addition of a base. As the base, for example, alkali metal hydroxides such as lithium hydroxide and sodium hydroxide; alkali metal carbonates such as lithium carbonate, sodium carbonate and potassium carbonate; acetates such as sodium acetate; ammonia; organic amine; or the like can be used. The compounds of the formulas (16) and (17) are used in nearly stoichiometric amounts.

The azo compound represented by the formula (1) of the present invention can be isolated in free acid form by addition of mineral acid after the coupling reaction, and from this, inorganic salt can be eliminated by washing with water or acidic water. Subsequently, thus obtained acid-type coloring matter (compound) having a low salt content can be neutralized with an optional inorganic or organic base in an aqueous medium to make a solution of a corresponding salt. Examples of the inorganic base include, for example, hydroxides of an alkali metal such as lithium hydroxide, sodium hydroxide and potassium hydroxide; ammonium hydroxide; carbonates of an alkali metal such as lithium carbonate, sodium carbonate and potassium carbonate; or the like, and examples of the organic base include organic amine, for example, alkanolamines represented by the above formula (4) such as diethanolamine and triethanolamine, or the like, but not limited thereto.
Otherwise, after the coupling reaction, an inorganic salt, preferably an alkali metal chloride salt, for example, a sodium chloride, a lithium chloride or the like instead of mineral acid can be added for salting out to obtain a compound represented by the formula (1) of the present invention as an alkali metal salt or the like. In this case, elimination of an inorganic salt can be carried out by recrystallization or the like. For example, it can be carried out by a method where a salt obtained by salting out, for example, an alkali metal salt is dissolved in water and then precipitated by addition of alcohol such as 2-propanol or the like, which can be, if necessary, repeated plural times (for example, 2 to 3 times) to obtain a salt of the pentakis-azo compound of the formula (1) containing less inorganic salt, for example, an alkali metal salt.

The azo compound of the present invention can be used directly or in formulation with an appropriate carrier or the like, as a colorant for various kinds of articles. Particularly the azo compound of the present invention is highly soluble to water or a solvent whose main component is water (both are also referred to as aqueous medium collectively) (for example, its solubility to water is not less than 100 g/L), so said compound can be dissolved in an aqueous medium to easily obtain a water-based composition containing said compound. Said water-based composition is useful as a colorant for various kinds of articles. For example, said water-based composition can dye a material composed of cellulose. In addition, it can dye other materials having carbonamide bonds and widely used for dyeing of leather, textile and paper. Meanwhile, a typical use of the compound of the present invention includes an ink composition prepared by dissolving it in a liquid medium.

And next, the ink composition of the present invention will be explained.
A reaction solution containing the azo compound of the present invention represented by the above formula (1) can be used directly for production of the ink composition. Said azo compound is, however, usually taken out from the reaction solution to use for production of the ink. As this method of taking-out, any method can be used as long as said azo compound can be isolated from the reaction solution containing said azo composition, for example, by drying, for example, spray drying; otherwise the azo compound of the present invention may be isolated by salting out with inorganic salts such as sodium chloride, potassium chloride, calcium chloride and sodium sulfate; aciding out with mineral acid such as hydrochloric acid, sulfuric acid and nitric acid; or acid-salting out which is a combined method of salting out and aciding out, and if required, the azo compound may be purified by a method of recrystallization and the like. Typically, a salt obtained by salting out is preferably purified for use.

The ink composition of the present invention is a composition whose main medium is water containing typically 0.1 to 20 mass%, preferably 1 to 10 mass%, more preferably 2 to 8 mass% of the azo compound represented by the formula (1) of the present invention. The ink composition of the present invention may further contain, for example, 0 to 30 mass%, preferably 2 to 25 mass%, of a water-soluble organic solvent and, for example, 0 to 10 mass%, optionally 0 to 5mass%, of an ink preparation agent. The typically preferable range is approximately 1 to 6 mass%. The rest is water. And, the pH of the ink composition is preferably pH 5 to 11, more preferably pH 7 to 10 in view of improvement of its storage stability. The surface tension of the ink composition is preferably 25 to 70 mN/m, more preferably 25 to 60 mN/m. The viscosity of the ink composition is preferably not more than 30 mPa·s, more preferably not more than 20 mPa·s. It is possible to adjust appropriately the pH and surface tension of the ink composition of the present invention with pH adjusters and/or surfactants and the like described later.

The ink composition of the present invention is a composition obtained by dissolving the azo compound represented by the above formula (1) in water or a water-soluble organic solvent (water-miscible organic solvent), and if required, by addition of an ink preparation agent. In the case that this ink composition is used as an ink for an inkjet printer, it is preferable to use the ink composition which has less content of inorganic substances such as a metal cation chloride and a sulfuric acid salt for the azo compound of the present invention, and the content is, for example, approximately not more than 1 mass% (to the coloring matter) only as guide. In order to produce the azo compound of the present invention having less content of inorganic substances, desalting treatment may be conducted, for example, by an ordinary method such as reverse osmosis method; a method where a dried one or a wet cake of the azo compound of the present invention is stirred in a mixed solvent of an alcohol such as methanol and water, filtration-separated, and dried; or a method where water washing in the case of aciding out or recrystallization in the case of salting out as described above, or the like.

Specific examples of the water-soluble organic solvent which can be used for preparation of the above ink composition include, for example, a C1 to C4 alkanol such as methanol, ethanol, propanol, isopropanol, butanol, isobutanol, sec-butanol and tert-butanol; a carboxylic acid amide such as N,N-dimethylformamide or N,N-dimethylacetamide; a lactam such as 2-pyrrolidone or N-methylpyrrolidin-2-one; cyclic ureas such as 1,3-dimethylimidazolidin-2-one or 1,3-dimethylhexahydropyrimid-2-one; a ketone or a ketoalcohol such as acetone, methylethylketone or 2-methyl-2-hydroxypentan-4-one; a cyclic ether such as tetrahydrofuran and dioxane; a monomer, oligomer or polyalkylene glycol or thioglycol having C2 to C6 alkylene units such as ethylene glycol, 1,2-propylene glycol, 1,3-propylene glycol, 1,2-butylene glycol, 1,4-butylene glycol, 1,6-hexylene glycol, diethylene glycol, triethylene glycol, tetraethylene glycol, dipropylene glycol, polyethylene glycol, polypropylene glycol, thiodiglycol and dithiodiglycol; a polyol (triol) such as glycerin or hexane-1,2,6-triol; a C1 to C4 alkyl ether of a polyhydric alcohol such as ethylene glycol monomethyl ether or ethylene glycol monoethyl ether, diethylene glycol monomethyl ether or diethylene glycol monoethyl ether, or triethylene glycol monomethyl ether or triethylene glycol monoethyl ether; gamma-butylolactone; dimethylsulfoxide; and the like. These organic solvents may be used alone or in a combination of two or more kinds thereof.

The ink preparation agent to be used in preparing the above ink composition includes, for example, an antiseptic and fungicide, a pH adjuster, a chelating agent, a rust-preventive agent, a water-soluble ultraviolet absorber, a water-soluble polymer compound, a dye-dissolving agent, an antioxidant, a surfactant, and the like. Hereinafter, these agents will be explained.

Specific examples of the fungicide include sodium dehydroacetate, sodium benzoate, sodium pyridinethion-1-oxide, p-hydroxybenzoate ethyl ester, 1,2-benzisothiazolin-3-one and a salt thereof, and the like. These are preferably used in an amount of 0.02 to 1.00 mass% in the ink composition.

Examples of the antiseptic agent include compounds of, for example, an organic sulfur base, an organic nitrogen sulfur base, an organic halogen base, a haloallylsulfone base, an iodopropargyl base, an N-haloalkylthio base, a nitrile base, a pyridine base, an 8-oxyquinoline base, a benzothiazole base, an isothiazoline base, a dithiol base, a pyridineoxide base, a nitropropane base, an organotin base, a phenol base, a quaternary ammonium salt base, a triazine base, a thiazine base, an anilide base, an adamantane base, a dithiocarbamate base, a brominated indanone base, a benzylbromoacetate base, an inorganic salt base and the like. A specific example of the organic halogen based compound includes, for example, sodium pentachlorophenol, a specific example of the pyridine oxide based compound includes, for example, a sodium 2-pyridinethiol-1-oxide, a specific example of the inorganic salt based compound includes anhydrous sodium acetate, the isothiazoline based compound includes, for example, 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride and the like. Specific examples of other antiseptic and fungicides include sodium sorbate, sodium benzoate and the like.

As the pH adjuster, any substance can be used as long as it can control the pH of the ink, for example, in the range of 5 to 11 without adverse effects on the ink to be formulated. Its specific examples include, for example, alkanolamines such as diethanolamine, triethanolamine and n-methyldiethanolamine; hydroxides of an alkali metal such as lithium hydroxide, sodium hydroxide and potassium hydroxide; an ammonium hydroxide (ammonia); carbonates of an alkali metal such as lithium carbonate, sodium carbonate, sodium hydrogen carbonate and potassium carbonate; inorganic bases such as potassium acetate, sodium silicate and disodium phosphate; and the like.

Specific examples of the chelating agent include, for example, sodium ethylenediaminetetraacetate, sodium nitrilotriacetate, sodium hydroxylethylethylenediamine triacetate, sodium diethylenetriaminepentaacetate, sodium uracildiacetate and the like.

Specific examples of the rust-preventive agent include, for example, acidic sulfite salts, sodium thiosulfate, ammonium thioglycollate, diisopropylammonium nitrite, pentaerythritol tetranitrate, dicyclohexylammonium nitrite and the like.
Examples of the water-soluble ultraviolet absorber include a sulfonated benzophenone based compound, a benzotriazole based compound, a salicylic acid based compound, a cinnamic acid based compound and a triazine based compound.
Specific examples of the water-soluble polymer compound include, for example, polyvinyl alcohol, cellulose derivatives, polyamines, polyimines and the like.

Specific examples of the dye dissolving agent include, for example, ε-caprolactam, ethylene carbonate, urea and the like.
For examples of the antioxidant, for example, various organic and metal complex based antifading agents can be used. Examples of the above organic based antifading agent include hydroquinones, alkoxyphenols, dialkoxyphenols, phenols, anilines, amines, indanes, chromans, alkoxyanilines, heterocycles and the like.

Examples of the surfactant include, for example, known surfactants such as anion based, cation based and nonion based. Examples of the anionic surfactant include alkyl sulfonate, alkyl carboxylate, α-olefin sulfonate, polyoxyethylene alkyl ether acetate, N-acylamino acid and a salt thereof, an N-acylmethyltaurine salt, alkylsulfate polyoxyalkyl ether sulfate, alkyl sulfate polyoxyethylene alkyl ether phosphate, rosin acid soap, caster oil sulfate, lauryl alcohol sulfate, alkylphenol type phosphate ester, alkyl type phosphate ester, alkylallyl sulfonate, diethyl sulfosuccinate, diethylhexyl sulfosuccinic acid, dioctyl sulfosuccinate and the like. The cationic surfactant includes 2-vinyl pyridine derivatives, poly 4-vinyl pyridine derivatives and the like. Specific examples of the amphoteric surfactant include lauryl dimethyl amino acetic acid betaine, 2-alkyl-N-carboxymethyl-N-hydroxyethylimidazolinium betaine, coconut oil fatty acid amide propyl dimethylamino acetic acid betaine, polyoctylpolyaminoethylglycine and other surfactants such as imidazoline derivatives. Specific examples of the nonionic surfactant include ethers such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ether and polyoxyallylalkyl ether; esters such as polyoxyethylene oleic acid, polyoxyethylene oleate, polyoxyethylene distearate, sorbitan laurate, sorbitan monostearate, sorbitan monooleate, sorbitan sesquiorate, polyoxyethylene monooleate and polyoxyethylene stearate; acetylene glycols such as 2,4,7,9-tetramethyl-5-decyne-4,7-diol, 3,6-dimethyl-4-octyne-3,6-diol and 3,5-dimethyl-1-hexyn-3-ol (for example, trade names: Surfynol 104, 105, 82, 465, and Olfine STG, manufactured by Nissin Chemical Industry Co., Ltd.); and the like. These ink preparation agents are used alone or in mixture thereof.

The ink composition of the present invention is obtained by mixing the above components in arbitrary order and by stirring. The resulting ink composition may be, if desired, filtered with a membrane filter or the like to remove impurities. In order to adjust black tone of the ink composition, other coloring matters having various hues, other than the azo compound represented by the formula (1) of the present invention, can be mixed. In that case, coloring matters of black with other hues, yellow, magenta, cyan and other colors can be used in mixture.

The ink composition of the present invention can be used in various applications, suitably for a water-based ink for writing, a water-based printing ink, an ink for information recording and the like, particularly preferably used as an ink for inkjet, and suitably in an inkjet recording method of the present invention described later.

Next, the inkjet recording method of the present invention will be explained. The inkjet recording method of the present invention is characterized by using the above ink composition of the present invention to perform recording. In the inkjet recording method of the present invention, recording is performed on image receiving materials using an ink for inkjet containing the above ink composition, an ink nozzle and the like to be used on that occasion are not especially limited and can be selected appropriately according to the purpose, and known methods such as an electric charge controlling method of discharging ink utilizing electrostatic induction force, a drop-on-demand method (pressure pulse method) of making use of vibration pressure of piezoelectric elements, an acoustic inkjet method of discharging ink by radiation pressure of acoustic beams to ink, where the acoustic beams are converted from electric signals, a thermal inkjet method (Bubble Jet (registered trademark)) of making use of pressure of bubbles generated by heating ink, and the like can be employed. The above inkjet recording method includes a method of injecting a number of tiny droplets of a low concentration ink called a photo ink, a method for improving image quality using multiple inks having substantially the same hue and different concentration, and a method of using a colorless and transparent ink.

The colored article of the present invention is one colored with the above compound of the present invention or a colorant containing it, for example, the ink composition, more preferably by an inkjet printer using the ink composition of the present invention. Articles to be colored include, for example, sheet for information transmission such as paper and film, textile or cloth (cellulose, nylon, wool and the like), leather, substrates for color filters and the like. As the sheet for information transmission, preferable are surface-treated ones, specifically ones provided with an ink receiving layer on the substrate of paper, synthetic paper, film and the like. An ink receiving layer can be provided, for example, by impregnating or coating a cationic polymer on the above substrate, or by coating porous white inorganic substance such as porous silica, aluminasol, special ceramics and the like which can absorb the coloring matter in the ink, on the surface of the above substrate, together with a hydrophilic polymer such as polyvinyl alcohol, polyvinyl pyrrolidone and the like. Such articles as provided with an ink receiving layer are usually called inkjet paper (film), glossy paper (film) and the like, and available as commercial items such as, for example, Pictorico (trade name; manufactured by Asahi Glass Co., Ltd.), Professional Photopaper, Super Photopaper, and Matte Photopaper (all manufactured by Canon Inc.), PM PHOTOGRAPH PAPER (glossy), PM MATTE PAPER (both are trade names; manufactured by SEIKO-EPSON CORPORATION), Premium Plus Photo Paper, Premium Glossy Film, Photo Paper (all are trade names; manufactured by Hewllett Packard Japan, Ltd.), PhotoLikeQP(trade name; manufactured by KONICA Corporation) and the like. It goes without saying that a plain paper can be used.

Among them, it is known that discoloration or fading of images recorded on sheet for information transmission, the surface of which is coated with porous white inorganic substance, is especially to be proceeded by ozone gas, but the ink composition of the present invention is so superior in ozone gas fastness that it has an effect especially in recording on such a record-receiving material.

For recording on a record-receiving material such as sheet for information transmittance by the inkjet recording method of the present invention, for example, a container containing the above ink composition can be set on the predefined position of an inkjet printer and recording can be performed on a record-receiving material in a conventional manner. In the inkjet recording method of the present invention, the ink composition of the present invention of black can be used in combination with known and publicly used ink compositions of magenta, cyan, yellow, if required, green, blue (or violet) and red (orange). Each color ink composition is injected into each container, which is comprised in the predefined position in the inkjet printer for use, as well as a container containing a water-based black ink composition for inkjet recording of the present invention.

The azo compound of the present invention is excellent in water-solubility, and the ink composition of the present invention comprising this azo compound does not exhibit crystal precipitation, change in the physical property, color change nor the like after storage for a long period of time, and exhibit favorable storage stability. And a black ink composition for recording which contains the azo compound of the present invention is used for inkjet recording and for writing tools, and its printed images exhibit a black color with high printing density and are excellent in ozone gas fastness, light fastness and bronzing properties when recording is performed on a plain paper and an inkjet paper.

### Examples

Hereinafter, the present invention will be more specifically explained by Examples, but the present invention is not limited to the following Examples at all. In this connection, "part" and "%" in the specification are based on mass unless otherwise specified. In addition, a sulfo group is shown in free acid form in the following formulas.

### Example 1

(1) After 6.4 parts of 2-amino-5-naphthole-1,7-disulfonic acid and 4.1 parts of p-toluenesulfonyl chloride were reacted at pH 8.0 to 8.5 at 70°C for 1 hour, the reaction product was subjected to salting out by addition of a sodium chloride under acidic conditions and filtration-separated to obtain a compound of the formula (18), 8.8 parts of which compound was dissolved in 90 parts of water while adjusting the pH at 6.0 to 8.0 with sodium carbonate, followed by addition of 6.8 parts of 35% hydrochloric acid, and then, with the temperature adjusted at 0 to 5°C, 3.6 parts of a 40% sodium nitrite aqueous solution was added thereto for diazotization.

[KA 19]

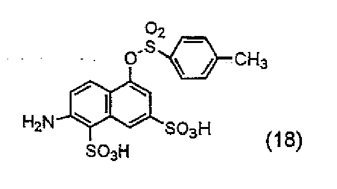

To this diazo suspension, a liquid where 5.8 parts of 4-amino-5-hydroxynaphthalene-1,7-disulfonic acid was suspended in 60 parts of water was added, followed by stirring for 4 hours while maintaining the pH value of the solution at 2.4 to 2.8 with sodium carbonate at 10 to 20°C. Subsequently, the reaction product was dissolved with the pH value adjusted to 7.0 to 8.5 with sodium carbonate, to obtain an aqueous solution containing a monoazo compound of the formula (19).

[KA 20]

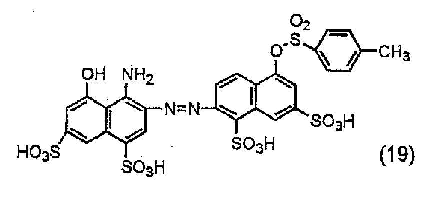

(2) In 50 parts of water, 5.2 parts of sodium 4-nitroaniline-2-sulfonic acid was dissolved, and 6.4 parts of 35% hydrochloric acid and 4.0 parts of an aqueous solution of 40% sodium nitrite were added thereto at 0 to 5°C for diazotization. This diazo suspension was added dropwise to the solution containing the monoazo compound of the following formula (19) obtained by the above reaction, at 10 to 20°C while maintaining the pH value of the solution at 8.0 to 9.0 with sodium carbonate. After completion of the dropwise addition, it was stirred at 15 to 30°C for 2 hours at pH 8.0 to 9.0 to obtain a solution containing a disazo compound of the formula (20).

[KA 21]

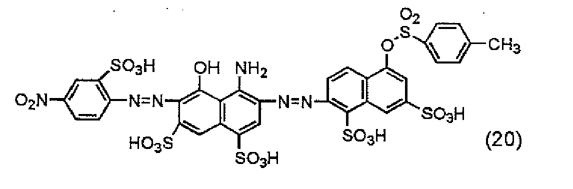

The above obtained solution was heated to 70°C and then stirred for 1.5 hours while maintaining the pH value at 10.5 to 11.0 with a sodium hydroxide. After cooling it to room temperature, by adjusting the pH to 7.0 to 8.0 with 35% hydrochloric acid, a sodium chloride was added thereto for salting out, followed by filtration-separation to obtain a wet cake containing a compound of the formula (21).

[KA 22]

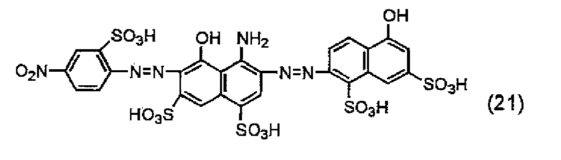

(3) In 80 parts of water, 7.5 parts of the compound of the formula (18) was dissolved while adjusting the pH at 6.0 to 8.0 with sodium carbonate and then 5.8 parts of 35% hydrochloric acid was added thereto and the temperature was adjusted at 0 to 5°C, followed by addition of 2.9 parts of a 40% sodium nitrite aqueous solution for diazotization. This diazo suspension was added dropwise to a solution where the above obtained wet cake containing the compound of the formula (21) was dissolved in 150 pars of water, at 15 to 30°C while maintaining the pH value of the solution at 8.0 to 9.0 with sodium carbonate. After completion of the dropwise addition, it was stirred at 15 to 30°C for 2 hours at pH 8.0 to 9.0 to obtain a solution containing a trisazo compound of the formula (22).

[KA 23]

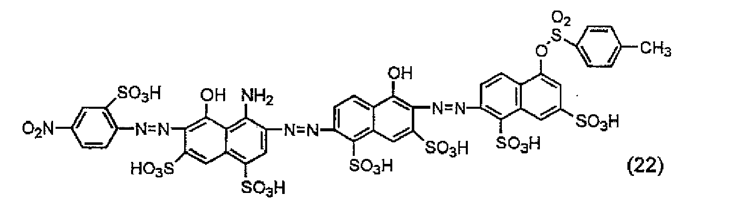

The above obtained solution was heated to 70°C and then stirred for 1.5 hours while maintaining the pH value at 10.5 to 11.0 with a sodium hydroxide. After cooling it to room temperature, the pH was adjusted to 7.0 to 8.0 with 35% hydrochloric acid. Then, a sodium chloride was added thereto for salting out followed by filtration-separation, to obtain a wet cake containing a compound of the formula (23).

[KA 24]

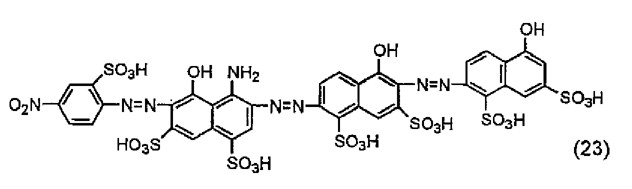

(4) In 55 parts of water, 5.3 parts of a compound of the following formula (24) was dissolved by adjusting the pH to 6.0 to 7.0 with a sodium hydroxide, and 4.9 parts of 35% hydrochloric acid and 2.7 parts of 40% sodium nitrite aqueous solution were added thereto at 0 to 5 °C for diazotization. This diazo suspension was added dropwise to a solution where the wet cake containing the compound of the formula (23) obtained by the above reaction was dissolved in 260 parts of water, at 15 to 30°C while maintaining the pH value of the solution at 8.0 to 9.0 with soda ash. After completion of the dropwise addition, it was stirred at 15 to 30°C for 2 hours at pH 8.0 to 9.0 followed by addition of a lithium chloride for salting out and filtered to obtain a wet cake. The resulting wet cake was dissolved in 110 parts of water and 250 parts of 2-propanol was added thereto for crystallization followed by filtration-separation. Further, the resulting wet cake was dissolved in 100 parts of water, and then 250 parts of 2-propanol was added thereto for crystallization followed by filtration-separation and drying to obtain 17.0 parts of an azo compound of the formula (25) of the present invention (a compound No.1 in Table 2) as a mixed salt of lithium and sodium. The maximum absorption wavelength (λ max) of this compound in an aqueous solution of pH 9 was 572 nm and the solubility was not less than 100 g/L.

[KA 25]

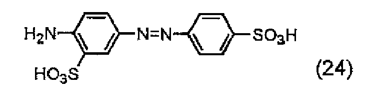

[KA 26]

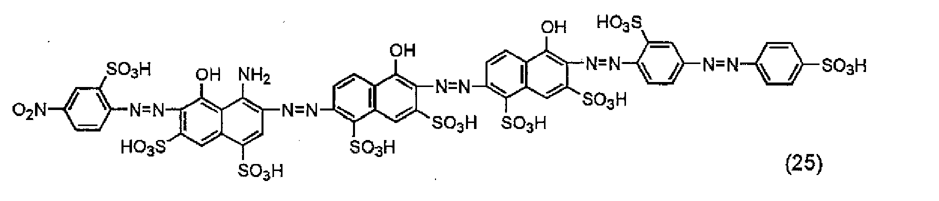

### Example 2

In the same manner as in Example 1 except that 5.2 parts of sodium 2-nitroaniline-4-sulfonic acid was used instead of 5.2 parts of sodium 4-nitroaniline-2-sulfonic acid in (2) of Example 1, 17.0 parts of an azo compound of the formula (26) of the present invention (a compound No.2 in Table 2) was obtained as a mixed salt of lithium and sodium. The maximum absorption wavelength (λ max) of this compound in an aqueous solution of pH 9 was 571 nm and the solubility was not less than 100 g/L.

[KA 27]

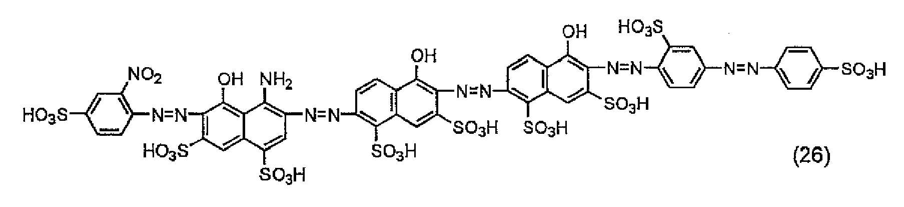

### Example 3

Instead of 5.3 parts of the compound of the formula (24) in (4) of Example 1, 10.8 parts of a compound of the following formula (27) obtained in the method described in JP 2005-068416 was used, which compound was dissolved by adjusting the pH to 6.0 to 7.0 with a sodium hydroxide, and 4.9 parts of 35% hydrochloric acid and 2.7 parts of a 40% sodium nitrite aqueous solution were added thereto at 0 to 5°C for diazotization. This diazo suspension was added dropwise in a solution where a wet cake containing a compound of the formula (23) obtained in the same manner as in Example 1 was dissolved in 260 parts of water, at 15 to 30°C while maintaining the pH of the solution at 8.0 to 9.0 with soda ash. After completion of the dropwise addition, it was stirred at 15 to 30°C for 2 hours at pH 8.0 to 9.0 and heated to 70°C, and then further stirred for 1.5 hours while maintaining the pH value at 10.5 to 11.0 with a sodium hydroxide.
After cooling it to room temperature, the pH was adjusted to 7.0 to 8.0 with 35% hydrochloric acid, then a lithium chloride was added thereto for salting out followed by filtration-separation.
The resulting wet cake was dissolved in 450 parts of water and 800 parts of 2-propanol was added thereto for crystallization followed by filtration-separation. Further, the resulting wet cake was dissolved in 450 parts of water and 800 parts of 2-propanol was added thereto for crystallization followed by filtration separation and drying to obtain 10.0 parts of an azo compound of the formula (28) of the present invention (a compound No.13 in Table 4) as a mixed salt of lithium and sodium. The maximum absorption wavelength (λ max) of this compound in an aqueous solution of pH 9 was 623 nm and the solubility was not less than 100 g/L.

[KA 28]

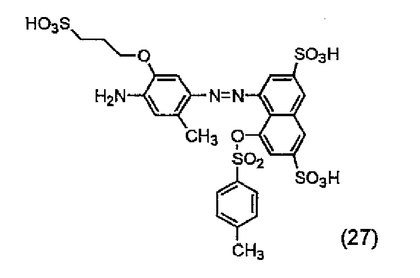

[KA 29]

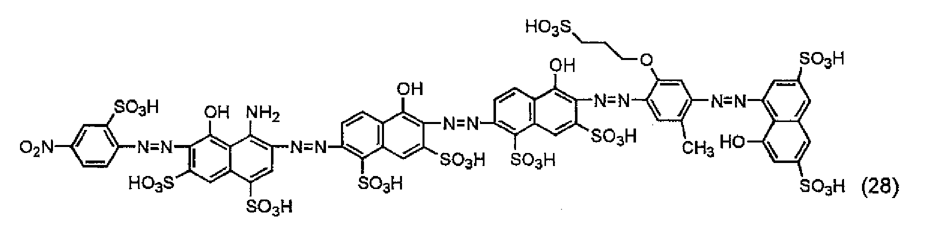

### Example 4A

In the same manner as in Example 1 except that 6.5 parts of a compound of the following formula (29) was used instead of 5.3 parts of the compound of the formula (24) in (4) of Example 1, 11.0 parts of an azo compound of the formula (30) of the present invention (a compound No.5 in Table 2) was obtained as a mixed salt of lithium and sodium. The maximum absorption wavelength (λ max) of this compound in an aqueous solution of pH 9 was 612 nm and the solubility was not less than 100 g/L.
In this connection, the compound of the formula (29) can be obtained, for example, by the following method. That is, 18.1 parts of 5-aminoisophthalic acid is dissolved in 100 parts of water by adjusting the pH to 6.0 to 7.0 with a sodium hydroxide and 36.5 parts of 35% hydrochloric acid and 18.1 parts of a 40% sodium nitrite aqueous solution are added thereto at 0 to 5°C for diazotization. This diazo suspension is added dropwise in a solution where 24.5 parts of a compound of the following formula (31) described in JP 2005-068416 is dissolved in 150 parts of water, at 5 to 10°C while maintaining the pH value of the solution at 5.0 to 6.0 with soda ash. After completion of the dropwise addition, it is stirred at 10 to 20°C for 2 hours at pH 8.0 to 9.0, and then a sodium chloride is added thereto for salting out, followed by filtration-separation to obtain a wet cake containing a compound of the formula (29).

[KA 30]

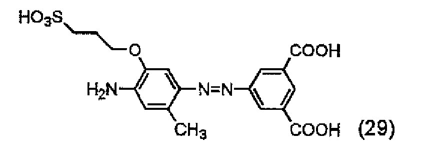

[KA 31]

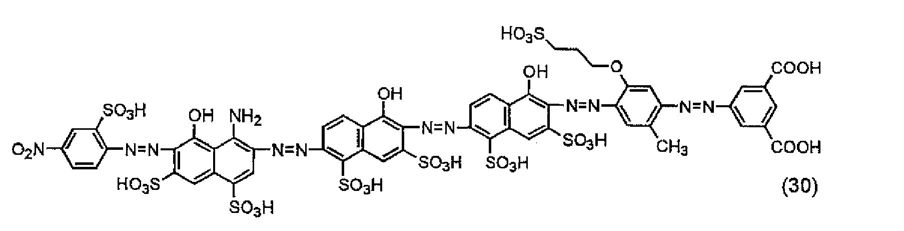

[KA 32]

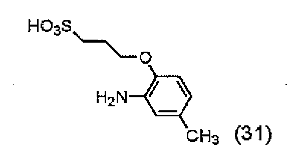

### Example 4B

(1) In the same manner as in (1) of Example 1 except that 6.4 parts of 3-amino-5-naphthole-2,7-disulfonic acid is used instead of 6.4 parts of 2-amino-5-naphthole-1,7-disulfonic acid in (1) of Example 1, a compound of the formula (34) can be obtained.

[KA 33]

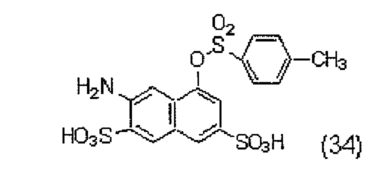

(2) In the same manner as in (2) and (3) of Example 1 except that 7.5 parts of a compound of the formula (34) is used instead of 7.5 parts of the compound of the formula (18) in (3) of Example 1, a compound of the formula (35) can be obtained.

[KA 34]

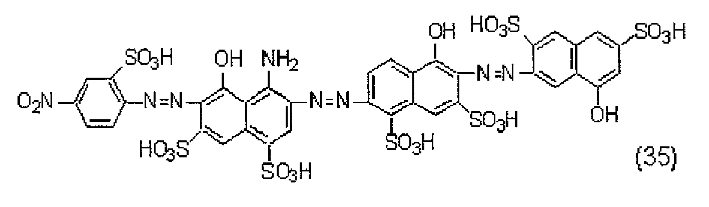

(3) In the same manner as in Example 3 except that a wet cake containing the above obtained compound of the formula (35) was used instead of the wet cake containing the compound of the formula (23) in Example 3 and a sodium chloride was used instead of the lithium chloride, 10.4 parts of an azo compound of the following formula (36) of the present invention was obtained as a sodium salt. The maximum absorption wavelength (λ max) of this compound in an aqueous solution of pH 9 was 618 nm and the solubility was not less than 100 g/L.

[KA 35]

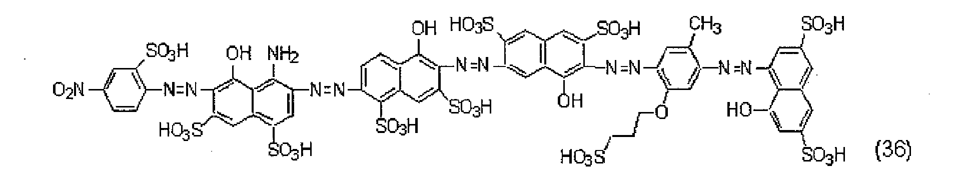

### Examples 5 to 9

### (A) Preparation of an ink.

An ink composition of the present invention of black was prepared by mixing the following components and foreign substances were eliminated by filtration with a 0.45 µm membrane filter.
And ion-exchanged water was used as water. The pH in preparing the ink was adjusted to 8 to 9 with an ammonium hydroxide.

**Table 5**

| | |
|---|---|
| Compound obtained in the above each Example | 5.0 parts |
| Glycerin | 5.0 parts |
| Urea | 5.0 parts |
| N-methyl-2-pyrrolidone | 4.0 parts |
| Isopropyl alcohol | 3.0 parts |
| Butyl carbitol | 2.0 parts |
| Surfactant | 0.1 part |
| (Surfynol 105 manufactured by Nissin Chemical Industry Co., Ltd.) | |
| Water + ammonium hydroxide | 75.9 parts |
| Total | 100.0 parts |

In Table 5, "Compound obtained in the above each Example" means respectively the compound of the formula (25) obtained in Example 1 for Example 5, the compound of the formula (26) obtained in Example 2 for Example 6, the compound of the formula (28) obtained in Example 3 for Example 7, the compound of formula (30) obtained in Example 4A for Example 8 and the compound of the formula (36) obtained in Example 4B for Example 9. This water-based ink composition did not exhibit precipitation separation during storage thereof, nor changed physical property after storage for a long period of time.

### (B) Inkjet Printing

Using each ink composition obtained above, by an inkjet printer (trade name: BJ-S630, manufactured by Canon Inc.), inkjet recording was conducted on three types of paper of Plain Paper (LBP PAPER LS-500 manufactured by Canon Inc.), Professional Glossy Paper PR (Professional Photopaper PR-101 manufactured by Canon Inc.), and Professional Glossy Paper PM (PM PHOTOGRAPH PAPER (glossy), KA420PSK manufactured by SEIKO-EPSON CORPORATION).
In printing, an image pattern was made so as to obtain several stages of gradations in reflection density, and a black colored print in half tone was obtained (As a grayscale mode is used in printing, any recording liquid of yellow, cyan, and magenta is not used in combination other than a black colored recording liquid). As for "printing density", which is an item to evaluate using a colorimeter, among testing methods described below, in color measuring of D value which is reflection density of a print, the highest portion of this D value was used. And, in measuring tests of "light fastness" and "ozone gas fastness" which are, similarly, items to evaluate using a colorimeter, measurement was conducted using the gradation portion where the reflection density D value of a print before testing is closest to 1.0.

### (C) Evaluation of a recorded image

As for recorded images according to the water-based ink composition of the present invention, evaluation was conducted on 3 items of printing density (reflection density), change in density after testing light fastness, and change in density after testing ozone gas fastness. In this connection, the ozone gas fastness test was conducted using Professional Glossy Paper PR and PM. The results are shown in Table 6. The specific methods for the tests are shown below.
1) Evaluations of printing density
Printing density (reflection density) of recorded images were measured using a colorimeter (SpectroEye manufactured by Gretag-Macbeth Ltd.) to calculate reflection density D values. Judgment criteria are shown below.

| | | |
|---|---|---|
| ○ | Plain Paper: 1.2 ≦ D | Glossy Paper: 2.0 ≦ D |
| Δ | Plain Paper: 1.0 ≦ D < 1.2 | Glossy Paper: 1.8 ≦ D < 2.0 |
| × | Plain Paper: D < 1.0 | Glossy Paper: D < 1.8 |

2) Light fastness test
Using a xenon weatherometer (Ci4000 manufactured by ATLAS Electric Devices Co.), each sample, with a glass plate having a thickness of 2 mm set up so as to allow an air layer to be between the sample and the glass, was irradiated for 50 hours under the conditions of an illuminance of 0.36 W/m², a humidity of 60% RH and a temperature of 24°C. After completion of the tests, color measuring was conducted using the above colorimeter. Residual percentages of the coloring matters were calculated by (reflection density after the test / reflection density before the test) x 100 (%) to evaluate. Judgment was conducted by the following criteria.
○ residual percentage: no less than 95%
Δ residual percentage: less than 95% and no less than 90%
× residual percentage: less than 90%

3) Ozone gas fastness test
Using a an ozone weatherometer (manufactured by Suga Test Instruments Co., Ltd.), each printed sample was left for 8 hours at an ozone concentration of 40 ppm, a humidity of 60% RH and a temperature of 24°C. After completion of the tests, color measuring was conducted using the above colorimeter. Residual percentages of the coloring matters were calculated by (reflection density after the test / reflection density before the test) x 100 (%) to evaluate. Judgment was conducted by the following criteria.
⊚ residual percentage: no less than 80%
○ residual percentage: no less than 60% and less than 80%
Δ residual percentage: no less than 40% and less than 60%
× residual percentage: less than 40%

### Comparative Example 1

For comparison, an ink composition was prepared by the same composition of the ink as in Examples 5 to 8 and 9 using the coloring matter of 1 in Table 1-1 of Patent Literature 1 (the following formula (32)) as a water-soluble coloring matter for inkjet. The evaluation results of printing density, light fastness, and ozone gas fastness of the obtained recorded images were shown in Table 6.

[KA 36]

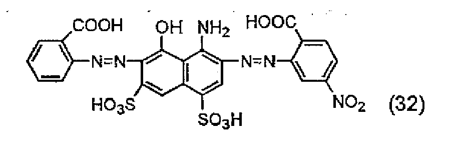

### Comparative Example 2

Similarly, for comparison, an ink composition was prepared by the same composition of the ink as in Examples 5 to 8 and 9 using a coloring matter AN-250 described in Example 1 of Patent Literature 3 (the following formula (33)) as a water-soluble coloring matter for inkjet. The evaluation results of printing density, light fastness, and ozone gas fastness of the obtained recorded images are shown in Table 6.

[KA 37]

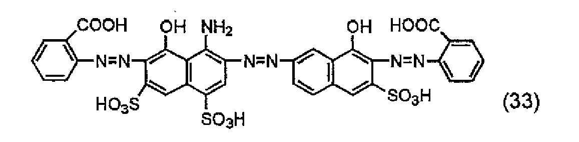

**Table 6**

| | Printing density | Light fastness | Ozone gas fastness |
|---|---|---|---|
| Example 5 (Formula (25)) | | | |
| Plain Paper | ○ | ○ | - |
| Professional Glossy Paper PR | ○ | ○ | ○ |
| Professional Glossy Paper PM | ○ | ○ | ⊚ |
| Example 6 (Formula (26)) | | | |
| Plain Paper | ○ | ○ | - |
| Professional Glossy Paper PR | ○ | ○ | ○ |
| Professional Glossy Paper PM | ○ | ○ | ⊚ |
| Example 7 (Formula (28)) | | | |
| Plain Paper | ○ | ○ | - |
| Professional Glossy Paper PR | ○ | ○ | ○ |
| Professional Glossy Paper PM | ○ | ○ | ⊚ |
| Example 8 (Formula (30)) | | | |
| Plain Paper | ○ | ○ | - |
| Professional Glossy Paper PR | ○ | ○ | ○ |
| Professional Glossy Paper PM | ○ | ○ | ⊚ |
| Example 9 (Formula (36)) | | | |
| Plain Paper | ○ | ○ | - |
| Professional Glossy Paper PR | ○ | ○ | ○ |
| Professional Glossy Paper PM | ○ | ○ | ⊚ |
| Comparative Example 1 (Formula (32)) | | | |
| Plain Paper | ○ | Δ | - |
| Professional Glossy Paper PR | ○ | Δ | × |
| Professional Glossy Paper PM | ○ | ○ | Δ |
| Comparative Example 2 (Formula (33)) | | | |
| Plain Paper | ○ | Δ | - |
| Professional Glossy Paper PR | ○ | Δ | × |
| Professional Glossy Paper PM | ○ | ○ | × |

Judging from Table 6, it is found that the ink compositions containing the azo compound of the present invention has high printing density and excellent light and ozone gas fastnesses compared with a conventional black dye (comparative example).
In addition, the azo compound of the present invention has high solubility and stability and makes it possible to design an ink having high density.

### Industrial Applicability

The ink composition containing the azo compound of the present invention is suitably used as a black ink liquid for inkjet recording and writing tools.

## Claims

1. An azo compound represented by the following Formula (1)
[KA1] 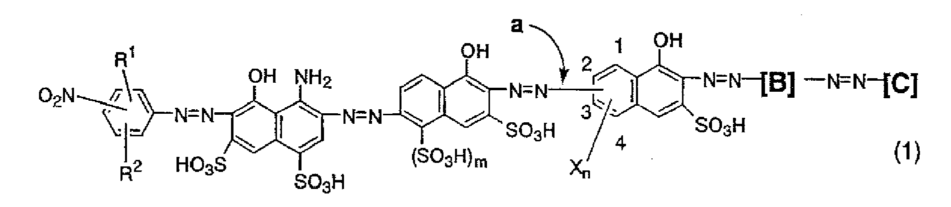 [(wherein, each of R¹ and R² independently represents a hydrogen atom, a halogen atom, a cyano group, a carboxyl group, a sulfo group, a sulfamoyl group, an N-alkylaminosulfonyl group, an N-phenylaminosulfonyl group, a C1 to C4 alkylsulfonyl group (which may be substituted by a hydroxy group), a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonyl amino group or a phenylsulfonylamino group (where a phenyl group may be substituted by a halogen atom, an alkyl group or a nitro group),
m represents 0 or 1,
n represents 0 or 1,
X represents a sulfo group,
[B] represents a group represented by the following formula (2) or (3)
[KA 2] 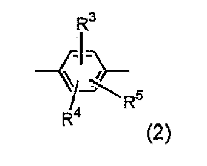 [KA 3] 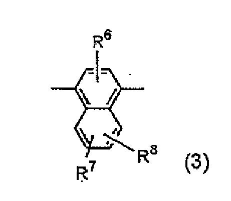 {in the formula (2) and (3), each of R³, R⁴, R⁵, R⁶, R⁷ and R⁸ independently represents a hydrogen atom, a halogen atom, a hydroxy group, a cyano group, a carboxyl group, a sulfo group, a sulfamoyl group, an N-alkylaminosulfonyl group, an N-phenylaminosulfonyl group, a C1 to C4 alkylsulfonyl group (which may be substituted by a hydroxy group), a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonylamino group or a phenylsulfonylamino group (where a phenyl group may be substituted by a halogen atom, an alkyl group or a nitro group)},
[C] represents a substituted phenyl group or a substituted naphthyl group {a substituent on a phenyl group or a naphthyl group is a hydroxy group, a halogen atom, a cyano group, a carboxyl group, a sulfo group, a sulfamoyl group, an N-alkylaminosulfonyl group, an N-phenylaminosulfonyl group, a C1 to C4 alkylsulfonyl group (which may be substituted by a hydroxy group), a phosphono group, a nitro group, an acyl group, a ureide group, a C1 to C4 alkyl group (which may be substituted by a hydroxy group or a C1 to C4 alkoxy group), a C1 to C4 alkoxy group (which may be substituted by a hydroxy group, a C1 to C4 alkoxy group, a sulfo group or a carboxyl group), an acylamino group, an alkylsulfonylamino group or a phenylsulfonylamino group (where a phenyl group may be substituted by a halogen atom, an alkyl group or a nitro group)}, respectively]
or a salt thereof.

2. The azo compound or the salt thereof according to Claim 1, wherein the bond position of Bonding a is the 2 position or the 3 position, the substitution position of X is the 3 position when the bond position of Bonding a is the 2 position, and the substitution position of X is the 4 position when the bond position of Bonding a is the 3 position.

3. The azo compound or the salt thereof according to Claim 1, wherein the bond position of Bonding a is the 3 position, the substitution position of X is the 4 position, and m and n are 1.

4. The azo compound or the salt thereof according to Claim 1, wherein R¹ is a sulfo group, the substitution position of the nitro group is the para position to the azo group when the substitution position of R¹ is the ortho position to the azo group, the substitution position of the nitro group is the ortho position to the azo group when the substitution position of R¹ is the para position to the azo group, and R² is a hydrogen atom.

5. The azo compound or the salt thereof according to Claim 1, wherein R¹ is a sulfo group and its substitution position is the ortho position to the azo group, the substitution position of the nitro group is the para position to the azo group, R² is a hydrogen atom, the bond position of Bonding a is the 3 position, the substitution position of X is the 4 position, and m and n are 1.

6. The azo compound or the salt thereof according to Claims 1 to 5,
wherein [B] is the formula (2).

7. The azo compound or the salt thereof according to Claim 6, wherein [B] is the formula (2), R³ is a sulfo group, R⁴ and R⁵ are hydrogen atoms, and [C] is a substituted phenyl group having a sulfo group as a substituent.

8. The azo compound or the salt thereof according to Claim 1,
wherein R¹ is a sulfo group and its substitution position is the ortho position to the azo group, the substitution position of the nitro group is the para position to the azo group, and R² is a hydrogen atom; or R¹ is a sulfo group and its substitution position is para position to the azo group, the substitution position of the nitro group is the ortho position to the azo group, and R² is a hydrogen atom; otherwise R¹ is a C1 to C4 alkoxy group and its substitution position is the ortho position to the azo group, the substitution position of the nitro group is the para position to the azo group, and R² is a sulfo group and its substitution position is the meta position to the azo group, except for the case that all the three substituents of R¹, the nitro group and R² are substituted in sequence when R² is a sulfo group,
wherein the substitution position of X is the 3 position when the bond position of Bonding a is the 2 position, and the substitution position of X is the 4 position when the bond position of Bonding a is the 3 position,
wherein m is 1 and n is 0 or 1,
wherein R³ is a sulfo group, a sulfo (C1 to C4) alkoxy group or a carboxy C1 to C4 alkoxy group, R⁴ is a hydrogen atom, and R⁵ is a hydrogen atom or a C1 to C4 alkyl group, in the case that [B] is the formula (2); and R⁶ is a hydrogen atom, at least one of R⁷ and R⁸ is a sulfo group, in the case that [B] is the formula (3), and
wherein the substituent on the phenyl group is selected from a sulfo group, a carboxyl group, a nitro group, a sulfamoyl group, a hydroxy C1 to C4 alkylsulfo group and a C1 to C4 alkoxy group, in the case that [C] is a substituted phenyl group; and the substituent on the naphthyl group is selected from a sulfo group, a nitro group and a hydroxy group, in the case that [C] is a substituted naphthyl group.

9. The azo compound or the salt thereof according to Claim 1,
wherein R¹ is a sulfo group and its substitution position is the ortho position to the azo group, the substitution position of the nitro group is the para position to the azo group and R² is a hydrogen atom; otherwise R¹ is a sulfo group and its substitution position is the para position to the azo group, the substitution position of the nitro group is the ortho position to the azo group and R² is a hydrogen atom,
wherein the bond position of Bonding a is the 3 position, the substitution position of X is the 4 position, m and n are 1, [B] is the formula (2), R³ is a sulfo group or a sulfo C1 to C4 alkoxy group, R⁴ is a hydrogen atom and R⁵ is a hydrogen atom or a C1 to C4 alkyl group, and
wherein the substituent on the phenyl group is selected from the group consisting of a sulfo group and a carboxyl group, in the case that [C] is a substituted phenyl group; and the substituent on the naphthyl group is selected from the group consisting of a sulfo group and a hydroxy group, in the case that [C] is a substituted naphthyl group.

10. The azo compound or the salt thereof according to Claim 1, wherein R¹ is a sulfo group and its substitution position is the ortho position to the azo group, the substitution position of the nitro group is the para position to the azo group, R² is a hydrogen atom, the bond position of Bonding a is the 3 position , the substitution position of X is the 4 position , m and n are 1, [B] is the formula (2), R³ is a sulfo group, R⁴ and R⁵ are hydrogen atoms, and [C] is a substituted phenyl group, and its substituent is a sulfo group.

11. The azo compound or the salt thereof according to Claim 1, wherein R¹ is a sulfo group and its substitution position is the ortho position to the azo group, the substitution position of the nitro group is the para position to the azo group, R² is a hydrogen atom, the bond position of Bonding a is the 3 position , the substitution position of X is the 4 position , m and n are 1, [B] is the formula (2), R³ is a sulfopropoxy group, R⁴ is hydrogen atom, R⁵ is methyl, and [C] is a substituted phenyl group or a substituted naphthyl group and its substituent is a group selected from the group consisting of a sulfo group, a hydroxy group and a carboxyl group.

12. The azo compound or the salt thereof according to Claim 1, wherein R¹ is a sulfo group and its substitution position is the para position to the azo group, the substitution position of the nitro group is the ortho position to the azo group, R² is a hydrogen atom, the bond position of Bonding a is the 3 position , the substitution position of X is the 4 position , m and n are 1, [B] is the formula (2), R³ is a sulfo group, R⁴ and R⁵ are hydrogen atoms, and [C] is a substituted phenyl group and its substituent is a sulfo group.

13. An ink composition **characterized by** comprising at least one of the azo compound or the salt thereof according to any one of Claims 1 to 12.

14. An inkjet print recording method **characterized by** using the ink composition according to Claim 13.

15. The inkjet print recording method according to Claim 14, wherein a record-receiving material in the inkjet print recording method is a sheet for information transmission.

16. The inkjet print recording method according to Claim 15, wherein the sheet for information transmission contains a porous white inorganic substance.

17. An ink jet printer loading a container containing the ink composition according to Claim 13.

18. A colored article colored with the azo compound or the salt thereof according to any one of Claims 1 to 12.

19. The azo compound or the salt thereof according to Claim 1, wherein R¹ is a sulfo group, one of the substitution positions of R¹ and the nitro group is the ortho position to the azo group and the other is the para position, R² is a hydrogen atom, the substitution position of X is the 3 position when the bond position of Bonding a is the 2 position, the substitution position of X is the 4 position when the bond position of Bonding a is the 3 position , m and n are 1, [B] is a group represented by the formula (2); (1) R⁴ and R⁵ are hydrogen atoms and [C] is a sulfo substituted phenyl group when R³ is a sulfo group, or (2) R⁴ is a hydrogen atom and R⁵ is a C1 to C4 alkyl group when R³ is a sulfo (C1 to C4) alkoxy group.

20. The azo compound or the salt thereof according to Claim 19, wherein [C] in Claim 1 is a dicarboxyl substituted phenyl group or a disulfo and hydroxy substituted naphthyl group when [B] is a group represented by the formula (2), R³ is a sulfo C1 to C4 alkoxy group, R⁴ is a hydrogen atom, and R⁵ is a C1 to C4 alkyl group.

21. The azo compound or the salt thereof according to Claim 1 or Claim 20, wherein [B] is 2-(3-sulfopropoxy)-5-methyl-1,4-phenylene represented by the following formula (2a).
[KA 4]
